# EUROPÄISCHE PATENTSCHRIFT

(11) **EP 1 998 996 B1**
(45) Veröffentlichungstag und Bekanntmachung des Hinweises auf die Patenterteilung: **13.06.2012**
(21) Anmeldenummer: 07723507.5
(22) Anmeldetag: 22.03.2007
(51) Int. Cl.: B60W 50/08, G06F 3/01, B60K 35/00, B60K 37/02, B60K 37/06, G06F 3/048

(54) **INTERAKTIVE BEDIENVORRICHTUNG UND VERFAHREN ZUM BETREIBEN DER INTERAKTIVEN BEDIENVORRICHTUNG**
INTERACTIVE OPERATING DEVICE AND METHOD FOR OPERATING THE INTERACTIVE OPERATING DEVICE
SERVEUR INTERACTIF ET PROCÉDÉ PERMETTANT DE FAIRE FONCTIONNER LE SERVEUR INTERACTIF

(30) Priorität: 22.03.2006 DE 102006013067; 27.03.2006 DE 102006014426; 02.08.2006 DE 102006037156
(43) Veröffentlichungstag der Anmeldung: 10.12.2008
(73) Patentinhaber: Volkswagen Aktiengesellschaft, 38436 Wolfsburg (DE)
(72) Erfinder: BACHFISCHER, Katharina, 40476 Düsseldorf (DE); WÄLLER, Christoph, 38102 Braunschweig (DE); WAGNER, Volkmar, 10777 Berlin (DE); DEHMANN, Rainer, 10963 Berlin (DE)
(74) Vertreter: Obst, Bernhard
(86) Internationale Anmeldenummer: PCT/EP2007/002553
(87) Internationale Veröffentlichungsnummer: WO 2007/107368

(56) Entgegenhaltungen:
- WO-A-02/29640
- DE-A1- 10 022 321
- DE-A1- 19 529 571
- JP-A- 10 024 785
- US-A1- 2004 254 699
- US-A1- 2005 063 564
- US-B1- 6 363 160

## Beschreibung

Die Erfindung betrifft ein Verfahren zum Betreiben einer interaktiven Bedienvorrichtung mit einer Anzeigevorrichtung nach dem Oberbegriff des Patentanspruchs 1 und eine Bedienvorrichtung mit einer Anzeigevorrichtung nach dem Oberbegriff des Patentanspruchs 9.

Die Bedienung von automotiven Anwendungen in einem Kraftfahrzeugcockpit erfolgt häufig über so genannte interaktive Bedienvorrichtungen. Eine interaktive Bedienvorrichtung umfasst eine Anzeigevorrichtung, auf der ein oder mehrere Bedienelemente graphisch dargestellt werden. Die einzelnen automotiven Anwendungen sind den Bedienelementen zugeordnet. Eine Aktion, die im Folgenden als Bedienaktion bezeichnet wird, wird aktiviert oder ausgelöst, indem ein Nutzer einen Körperteil, beispielsweise einen Finger einer Hand, auf die graphische Darstellung des Bedienelements zubewegt. Von der Ausgestaltung einer Sensoreinheit der Bedienvorrichtung ist es abhängig, ob der Körperteil eine vor der Anzeigevorrichtung angeordnete oder in diese integrierte Sensoreinheit (z. B. eine berührungsempfindliche Folie) berühren muss oder ob es ausreichend ist, sich nur auf einen gewissen Abstand an das jeweilige Bedienelement anzunähern, um die dem Bedienelement zugeordnete Bedienaktion zu aktivieren.

Interaktive Bedienvorrichtungen, bei denen eine Berührung notwendig ist, um die Bedienaktion auszulösen, werden als Touch-Screen-Bedienvorrichtungen bezeichnet. Interaktive Bedienvorrichtungen, die berührungslos aktiviert werden können, umfassen beispielsweise Sensoren, die Hochfrequenzsignale detektieren können, die über den menschlichen Körper übertragen werden. Hierbei ist es erforderlich, dass ein Hochfrequenzsender nahe dem Körper oder in Berührung mit dem Körper angeordnet ist. In einem Kraftfahrzeug kann beispielsweise ein solcher Hochfrequenzsender in den Fahrzeugsitz integriert sein. Verfahren und Vorrichtungen zum Übertragen von Informationen mittels hochfrequenter Signale über einen menschlichen Körper sind beispielsweise in der Druckschrift WO 2004/078536 beschrieben.

Der Bereich, in dem sich der Körperteil befinden muss, um die Bedienaktion zu aktivieren, wird als Aktivierungsbereich bezeichnet. Bei einer Touch-Screen-Bedienvorrichtung ist der Aktivierungsbereich eine zweidimensionale Fläche auf der Oberfläche der Touch-Screen-Bedienvorrichtung. Die Aktivierungsfläche stimmt in der Regel mit der Darstellungsfläche des zu betätigenden Bedienelements überein. Bei einer berührungslos bedienbaren Bedienvorrichtung ist der Aktivierungsbereich in der Regel ein dreidimensionales Gebiet dicht oberhalb der oder angrenzend an die Oberfläche der Anzeigevorrichtung. Eine Projektion des Aktivierungsbereichs entlang einer Flächennormalen der Oberfläche der Anzeigevorrichtung auf die Anzeigevorrichtung ist in der Regel deckungsgleich mit der Darstellungsfläche des zugehörigen Bedienelements.

Die Darstellung von Informationen auf den Anzeigevorrichtungen solcher interaktiven Bedienvorrichtungen ist im Stand der Technik nicht an dem Auflösungsvermögen des menschlichen Auges, sondern vor allem an einer Treffsicherheit und einer motorischen Präzision der menschlichen Finger der Nutzer orientiert.

Auf einer Anzeigevorrichtung dargestellte Bedienelemente, die auch als virtuelle Bedienelemente bezeichnet werden, umfassen u.a. Menüs, Knöpfe usw. Sie können jedoch auch die Gestalt von graphischen Objekten beispielsweise in interaktiv gestalteten Navigationskarten annehmen. Allgemein werden solche virtuellen Bedienelemente auch als Widgets bezeichnet. Die Bedienelemente werden heutzutage allgemein auf interaktiven Bedienvorrichtungen recht groß dargestellt, damit ein Nutzer sie mit seinen Fingern angenehm und leicht aktivieren kann. Dies hat zur Folge, dass die Darstellungsbereiche der Bedienelemente häufig einen beträchtlichen Teil der Anzeigefläche der Anzeigevorrichtung bedecken, die ansonsten für zusätzliche Informationen genutzt werden könnte. Häufig verdecken die Darstellungsbereiche "dahinter liegende" graphische informationen. Wird die Darstellung der Bedienelemente auf der Anzeigevorrichtung verkleinert, so gewinnt man Platz zur Informationsdarstellung, jedoch wird ein Bedienkomfort dadurch reduziert, da ein "Treffen" der Bedienelemente mit dem Finger erheblich erschwert ist.

Aus dem Stand der Technik ist es bekannt, die Skalierung der Bedienelemente als Antwort auf eine erste Bedienaktion zu skalieren. Bei solchen Bedienvorrichtungen sind mindestens zwei Bedienhandlungen notwendig, um eine gewünschte Bedienaktion zu aktivieren und auszuführen.

Aus der Druckschrift US 5,579,037 ist eine Anzeigevorrichtung mit einem elektromagnetischen Digitalisiertablett bekannt, mit dem auf der Anzeigevorrichtung dargestellte japanische Schriftzeichen eingegeben werden können. Das Digitalisiertablett umfasst einen über einen Draht mit dem Digitalisiertablett verbundenen Schreiber. Wird der Schreiber in einen ersten Abstand zu der Anzeigevorrichtung gebracht, so wird ein angezeigter Bereich um die Position, über der sich der Schreiber befindet vergrößert dargestellt. Solange der Abstand des Schreibers von der Anzeigevorrichtung kleiner als der erste Abstand und größer als ein zweiter Abstand ist, der kleiner als der erste Abstand ist, wird der vergrößerte Bereich an eine Positionsänderung des Schreibers parallel zu der Anzeigevorrichtung angepasst. Wird der zweite Abstand unterschritten, so wird der vergrößerte Bereich nicht mehr in Abhängigkeit der Bewegung parallel zu der Anzeigeoberfläche angepasst, so dass ein Eingeben eines von mehreren vergrößert dargestellten Schriftzeichen durch ein Berühren der Anzeigevorrichtung an der Stelle, an der das entsprechende vergrößerte Schriftzeichen dargestellt ist, erfolgen kann. Eine solche Bedienvorrichtung, die nur mit einem Schreiber betätigbar ist, ist für viele Anwendungen, beispielsweise als eine interaktive Bedienvorrichtung in einem Kraftfahrzeugcockpit, nicht geeignet. Ferner ist es in einem fahrenden Fahrzeug schwer, einen Schreiber in einem vorgegebenen Abstandsintervall parallel vor der Anzeigevorrichtung zu bewegen, um den korrekten Ausschnitt vergrößert dargestellt zu bekommen.

Aus DE10 2004 045 885 A1 ist ein Bedienelement, das vorzugsweise als Dreh-Drück-Ziehknopf ausgebildet ist, für ein Kraftfahrzeug zur Bedienung einer Funktion des Kraftfahrzeugs, insbesondere durch Drücken auf das Bedienelement, Berühren des Bedienelements, Drehen des Bedienelements und/oder Ziehen des Bedienelements, bekannt, wobei dem Bedienelement eine Beleuchtungsvorrichtung zur Beleuchtung des Bedienelements, ein Annäherungssensor zur Erkennung einer Annäherung eines Bedieners des Bedienelements und eine Beleuchtungssteuerung zur Einstellung der Beleuchtung des Bedienelements in Abhängigkeit eines Ausgangssignals des Annäherungssensors zugeordnet ist.

Wünschenswert ist somit eine interaktive Bedienvorrichtung, die einerseits jeweils eine optimale Informationsdarstellung ermöglicht und zugleich einen hohen Bedienkomfort bietet, indem Bedienelemente leicht aktivierbar sind.

Aus der US 2004/0254699 A1 ist Betätigungseingabevorrichtung mit einem autostereoskopischen Display bekannt, welches in einem virtuellen Raum vor dem Fahrersitz eines Fahrzeugs für den auf dem Fahrersitz sitzenden Fahrer eine dreidimensionale Abbildung darstellt. Über eine Abbildungserfassungsvorrichtung wird eine Abbildung des Fahrers und des virtuellen Raums aufgenommen. Die Abbildung wird einer Bildverarbeitung zugeführt. Eine elektronische Steuereinheit erkennt eine von dem Fahrer in dem virtuellen Raum ausgeführte Handbewegung durch einen Vergleich mit vorher aufgenommenen Abbildungen. Wenn eine Bewegung relativ zu der dreidimensionalen Abbildung in dem virtuellen Raum erkannt ist, wird durch die elektronische Steuereinheit für eine Fahrzeugvorrichtung eine Bedienaktion ausgelöst oder aktiviert und eine Darstellung in dem virtuellen Raum gemäß der erfolgten Bedienaktion angepasst.

Aus der JP 10269022 A ist eine tragbare Kommunikationseinrichtung bekannt, auf deren Anzeigefläche eine Bedienansicht mit einer Vielzahl von Eingabebedienelemente angezeigt ist, um Nutzereingaben erfassen zu können. Bei einer Annäherung eines Fingers an die Anzeigevorrichtung erfasst dieses eine Annäherungserfassungsvorrichtung. Ein vergrößertes Anzeigeprogramm vergrößert die Abbildung um eine Koordinate herum, der sich der Finger annähert, und stellt die vergrößerte Abbildung auf einem vergrößerten Abbildungsschirm dar. Nach einer Koordinatentransformation wird die Eingabe an ein Anwendungsprogramm weitergeleitet.

Das Dokument JP 10269022 A ist als nächstliengender Stand der Technik zu sehen.

Aus der DE 195 29 571 A1 sind ein Verfahren zum Bedienen eines elektrischen Gerätes und ein Bediengerät zum Bedienen eines elektrischen Gerätes insbesondere in Kraftfahrzeugen mit einem oder mehreren Bedienelementen bekannt, denen jeweils ein oder mehrere Funktionen zugeordnet sind. Das Bediengerät umfasst ferner eine Steuereinheit, eine mit der Steuereinheit verbundene Einheit zur Erkennung einer Annäherung an das Bedienelement und eine mit der Steuereinheit verbundene Ausgabeeinheit, welche bei einer Annäherung an ein Bedienelement, die diesem Bedienelement zugeordnete Funktion darstellend ausgibt, bevor die Betätigung des Bedienelements erfolgt und hierdurch die zugeordnete Funktion ausgelöst wird.

Der Erfindung liegt daher die technische Aufgabe zugrunde, eine Bedienvorrichtung und ein Verfahren zum Betreiben einer interaktiven Bedienvorrichtung zu schaffen, mit denen sowohl eine an das menschliche Auge angepasste optimale Informationsvermittlung und zugleich eine komfortable Aktivierung von Bedienelementen möglich ist.

Die Aufgabe wird erfindungsgemäß durch ein Verfahren mit den Merkmalen des Patentanspruchs 1 sowie eine Vorrichtung mit den Merkmalen des Patentanspruchs 9 gelöst. Die Erfindung basiert darauf, dass situationsabhängig die auf der Anzeigevorrichtung dargestellte Information angepasst wird. Hierbei kann eine Darstellung optimiert für eine visuelle Wahrnehmung der dargestellten Informationen ausgestaltet sein. Wird jedoch eine Bedienabsicht eines Nutzers ermittelt, so werden die dargestellten Informationen so verändert, dass eine Aktivierung eines Bedienelements jeweils entsprechend der ermittelten Bedienabsicht für das Bedienelement optimal möglich ist.

Erfindungsgemäß wird ein Verfahren zum Betreiben einer interaktiven Bedienvorrichtung, insbesondere in einem Kraftfahrzeug, mit einer Anzeigevorrichtung und auf der Anzeigeeinrichtung dargestellten und/oder darstellbaren Informationen, die Bedienelemente aufweisen, vorgeschlagen, das folgende Schritte umfasst:
- Ermitteln einer Bedienabsicht für mindestens eines der auf der Anzeigeeinrichtung dargestellten oder darstellbaren Bedienelemente, wobei die Bedienabsicht für das mindestens eine Bedienelement zeitlich vor einem Aktivieren der Bedienaktion ermittelt wird,
- Anpassen der auf der Anzeigeeinrichtung dargestellten Informationen in Abhängigkeit der ermittelten Bedienabsicht, so dass das mindestens eine zur Bedienung beabsichtigte Bedienelement optimiert für das Aktivieren des Bedienelementes dargestellt wird, wobei beim Ermitteln der Bedienabsicht eine Bedienwahrscheinlichkeit für das Bedienelement und gegebenenfalls weitere Bedienwahrscheinlichkeiten für weitere Bedienelemente ermittelt werden und eine Anpassung der dargestellten Informationen so erfolgt, dass das Bedienelement oder gegebenenfalls die weiteren Bedienelemente entsprechend ihrer Bedienwahrscheinlichkeit optimiert für eine Aktivierung der entsprechend zugeordneten Bedienaktion oder weiteren Bedienaktion dargestellt werden,
   wobei die auf der Anzeigeeinrichtungen dargestellten Informationen, sofern keine Bedienabsicht ermittelt wird, für eine Darstellung angepasst werden, die für eine visuelle Informationsübermittlung optimiert ist,
   und das optimierte Darstellen für das Aktivieren
- ein Erniedrigen einer Transparenz des mindestens einen Bedienelements und/oder
- ein Vergrößern des mindestens einen Bedienelements und/oder
- ein Verändern einer Darstellungsposition des mindestens einen Bedienelements und/oder
- ein Verändern eines relativen Abstands des mindestens einen Bedienelements von weiteren Bedienelementen und/oder
- eine Animation des Bedienelements
umfasst.

Gemäß der Erfindung ist somit vorgesehen, dass beim Anpassen eine Transparenz und/oder ein Abstand von benachbarten weiteren Bedienelementen und/oder eine Animation des Bedienelements oder mehrerer Bedienelemente verändert werden. Hierbei kann eine Liste, die mehrere Bedienelemente umfasst, geeignet animiert werden, um eine Auswahl von einem oder mehreren Listenelementen zu erleichtern. Insbesondere kann in Abhängigkeit von der ermittelten Bedienabsicht durch eine längere Liste gescrollt bzw. geblättert werden.

Gemäß der Erfindung ist ferner vorgesehen, dass beim Ermitteln der Bedienabsicht eine Bedienwahrscheinlichkeit für das Bedienelement und gegebenenfalls weitere Bedienwahrscheinlichkeiten für weitere Bedienelemente ermittelt werden und eine Anpassung der dargestellten Informationen so erfolgt, dass das mindestens eine Bedienelement oder die weiteren Bedienelemente entsprechend ihrer Bedienwahrscheinlichkeit optimiert für eine Aktivierung der entsprechend zugeordneten Bedienaktion oder weiteren Bedienaktionen dargestellt werden. Hierdurch lässt sich eine Art "Bedienungsspotlight" realisieren. In Abhängigkeit von einer Entfernung des Körperteils, seiner Bewegungsrichtung und/oder einer Geschwindigkeit der Bewegung sowie weiteren Nutzerinformationen kann ein Bereich auf der Anzeigevorrichtung ermittelt werden, in dem sich wahrscheinlich das zu bedienende Bedienelement befindet. Dieser ermittelte Bereich wird als Bedienungsspotlight bezeichnet. Das Bedienungsspotlight ist bei großer Distanz und geringer Bewegungsgeschwindigkeit der Bedienhand noch recht unscharf und wird mit zunehmender Nähe zur Anzeigevorrichtung schärfer. Unscharf bedeutet, dass eine Unsicherheit bezüglich einer Zielposition, zu der der Körperteil auf der Anzeigevorrichtung bewegt wird, herrscht. Diese Zielposition wird als ein Mittelpunkt des Bedienungsspotlights genutzt. Die Unsicherheit drückt sich in einer Fläche des Bedienungsspotlights auf der Anzeigevorrichtung aus.

Das Bedienungsspotlight wird in der Regel kreisförmig ausgestaltet, so dass sich die Unschärfe oder Unsicherheit bezüglich der Zielposition, zu der der Körperteil auf der Anzeigevorrichtung bewegt wird, sich in einem Radius des Bedienungsspotlights ausdrückt. Je größer die Unsicherheit (je unschärfer das Bedienungsspotlight) desto größer ist es. Je kleiner die Unsicherheit über die Zielposition (je schärfer das Bedienungsspotlight) ist desto kleiner wird das Bedienungsspotlight. Vorzugsweise ist vorgesehen, dass die Bedienelemente auf der Anzeigevorrichtung, je nachdem, wie viel ihrer Fläche bei einer vorgegebenen Skalierungsgröße sich im Bereich des Bedienungsspotlights befindet, wie scharf das Bedienungsspotlight ist und/oder wie groß ein Abstand des Bedienelements von der Position (dem Mittelpunkt) des Bedienungsspotlights ist, skaliert bzw. auf andere Weise, beispielsweise mittels einer Animation, eines Aufklappens einer Menuleiste usw., für eine einfache Aktivierbarkeit optimiert werden.

Ferner ist vorgesehen, die auf der Anzeigeeinrichtung dargestellten Informationen, sofern keine Bedienabsicht ermittelt wird, für eine Darstellung anzupassen, die für eine visuelle Informationsübermittlung optimiert ist,

Bei einem Wechsel von einem visuellen Layout, das für eine Wahrnehmung von Informationen optimiert ist, zu einem haptischen Layout, das für eine Bedienung optimiert ist, wird beispielsweise das Bedienelement eingeblendet oder vergrößert dargestellt. Ein klein dargestelltes Bedienelement wird beim Erkennen einer Bedienabsicht beispielsweise vergrößert dargestellt. Hierdurch wird erreicht, dass zwar eine hohe Informationsdichte auf der Anzeigevorrichtung dargestellt werden kann, jedoch jederzeit, sofern eine Bedienung erfolgen soll, diese komfortabel durchgeführt werden kann. Nutzerinformationen sind jene Sensorinformationen, die ein Verhalten des Nutzers angeben oder den Nutzer selbst beschreiben. Die Nutzerinformationen werden mit Hilfe von Sensoreinheiten ermittelt und sind Bestandteil der Sensorinformationen, die ausgewertet werden, um die Bedienabsicht zu ermitteln.

Bei einer vorteilhaften Ausführungsform umfasst ein Verfahren zum Betreiben einer interaktiven Bedienvorrichtung, die in einem Kraftfahrzeug angeordnet ist, mit einer Anzeigevorrichtung folgende Schritte:
- Anzeigen von graphischen Informationen auf der Anzeigevorrichtung;
- Empfangen von Sensorinformationen;
- Aktivieren einer Bedienaktion, wenn anhand der Sensorinformationen ermittelt wird, dass ein Körperteil eines Nutzers sich innerhalb eines Aktivierungsbereichs befindet, der räumlich relativ zu dem Darstellungsgebiet eines Bedienelementes auf der Anzeigevorrichtung festgelegt ist, dem die Bedienaktion zugeordnet ist,
   wobei vorgesehen ist, dass

- die empfangenen Sensorinformationen Nutzerinformationen umfassen, die zum Übermitteln einer Bedienabsicht für das mindestens eine Bedienelement zeitlich vor einem Aktivieren der Bedienaktion ausgewertet werden;
- die auf der Anzeigevorrichtung dargestellten oder darstellbaren Informationen in Abhängigkeit von der ermittelten Bedienabsicht angepasst werden, so dass das mindestens eine Bedienelement optimiert für das Aktivieren der dem Bedienelement zugeordneten Bedienaktion mit dem Körperteil dargestellt wird und
- beim Ermitteln der Bedienabsicht eine Bedienwahrscheinlichkeit für das Bedienelement und gegebenenfalls weitere Bedienwahrscheinlichkeiten für weitere Bedienelemente (33; ermittelt werden und eine Anpassung der dargestellten Informationen so erfolgt, dass das Bedienelement oder gegebenenfalls die weiteren Bedienelemente entsprechend ihrer Bedienwahrscheinlichkeit optimiert für eine Aktivierung der entsprechend zugeordneten Bedienaktion oder weiteren Bedienaktion dargestellt werden,
   wobei die auf der Anzeigeeinrichtung dargestellten Informationen, sofern keine Bedienabsicht ermittelt wird, für eine Darstellung angepasst werden, die für eine visuelle Informationsübermittlung optimiert ist,

Nach einer vorteilhaften Ausbildung der Erfindung wird zur Ermittlung der Bedienabsicht für mindestens eines der auf der Anzeigeeinrichtung dargestellten Bedienelemente erfasst, ob sich ein Körperteil der Bedienperson innerhalb eines Aktivierungsbereichs befindet, der räumlich zu einem Darstellungsgebiet mindestens eines der Bedienelemente auf der Anzeigeeinrichtung festgelegt ist.

Bei einer Ausführungsform ist vorgesehen, dass die Sensorinformationen Informationen über eine Blickrichtung des Nutzers und/oder eine Bewegungsrichtung des Körperteils des Nutzers umfassen.

Um eine Bedienabsicht zuverlässig ermitteln zu können, ist bei einer bevorzugten Ausführungsform der Erfindung vorgesehen, dass die Sensorinformationen Informationen über eine Körperaktion des Nutzers umfassen. Eine Körperaktion stellt beispielsweise eine Bewegung der Arme oder Hände bzw. Finger des Nutzers dar. Eine andere Körperaktion ist beispielsweise ein Ausrichten der Augen, um die angezeigten Informationen auf der Anzeigevorrichtung zu erfassen.

Bei einer weiteren Ausführungsform ist vorgesehen, dass die Steuereinheit derart ausgestaltet ist, dass anhand der Sensorinformationen eine Bewegungsrichtung des Körperteils und/oder die Blickrichtung des Nutzers ermittelbar ist und/oder ermittelt wird.

Bei einer besonders bevorzugten Ausführungsform ist daher vorgesehen, dass die Nutzerinformationen Informationen über eine Blickrichtung des Nutzers umfassen. Einem Betätigen eines Bedienelements geht nämlich häufig ein Blick des Nutzers auf die Anzeigevorrichtung voraus.

Die Blickrichtung eines Nutzers kann beispielsweise mittels Kamerasensoren erfasst werden. Eine bevorzugte Ausführungsform der Erfindung sieht daher vor, dass die Nutzerinformationen zumindest teilweise mittels eines Kamerasystems erfasst sind. Mit einem solchen Kamerasystem kann in der Regel auch die Bewegung von Körperteilen zuverlässig ermittelt werden.

Andere bevorzugte Ausführungsformen der Erfindung sehen vor, dass die Nutzerinformationen zumindest teilweise mittels eines Ultraschallsensorsystems erfasst sind. Ein Ultraschallsensorsystem ist geeignet, um die Position von Körperteilen besonders exakt und zuverlässig zu bestimmen. Mit einem Ultraschallsensorsystem kann somit eine Bewegung hin zur interaktiven Bedienvorrichtung bereits bei einer relativ großen Entfernung von der Bedienvorrichtung zuverlässig erkannt werden. Ebenso können genaue Positions-, Ausdehnungs- und Geschwindigkeitsmessungen in einem Nahbereich der Bedienvorrichtung ausgeführt werden. Ein Ultraschallsensorsystem kann alternativ oder gemeinsam mit anderen Sensorsystemen verwendet werden.

Bei einer besonders bevorzugten Ausführungsform der Erfindung wird anhand der Nutzerinformationen eine Bewegungsrichtung des Körperteils ermittelt. Diese Bewegungsrichtung kann einzeln oder beispielsweise gemeinsam mit anderen Informationen, insbesondere Nutzerinformationen, vorzugsweise einer Blickrichtung, genutzt werden, um ein Bedienelement oder mehrere Bedienelemente aus einer Gruppe von Bedienelementen ausfindig zu machen, die der Nutzer als nächstes bedienen möchte.

Bei einer besonders bevorzugten Ausführungsform ist vorgesehen, dass die Ermittlung der Bedienabsicht und das entsprechende Anpassen der dargestellten Information iterativ und/oder kontinuierlich ausgeführt werden. Hierdurch ist es möglich, beispielsweise das Bedienungsspotlight kontinuierlich zu ermitteln und eine Skalierung der in dem Bedienungsspotlight befindlichen Bedienelemente auf der Anzeigevorrichtung stufenlos vorzunehmen und an die Bewegung des Nutzers anzupassen.

Bei einer Ausführungsform der Erfindung ist vorgesehen, dass beim Anpassen eine Transparenz, ein Abstand von benachbarten weiteren Bedienelementen und/oder eine Animation des Bedienelements oder mehrerer Bedienelemente verändert werden. Hierbei kann eine Liste, die mehrere Bedienelemente umfasst, geeignet animiert werden, um eine Auswahl von einem oder mehreren Listenelementen zu erleichtern. Insbesondere kann in Abhängigkeit von der ermittelten Bedienabsicht durch eine längere Liste gescrollt bzw. geblättert werden.

Vorzugsweise ist ebenso vorgesehen, dass anhand der Nutzerinformationen ein Abstand des Körperteils von der Darstellung des Bedienelements ermittelt wird und das Bedienelement in Abhängigkeit von diesem Abstand skaliert wird. Wird beispielsweise ein berührungsloser Sensor zum Aktivieren der Bedienelemente verwendet, so kann von diesem Sensor eine Annäherung der Hand des Nutzers beispielsweise ca. 30 cm vor der Anzeigevorrichtung erfasst werden. Je näher sich die Hand bzw. der Finger der Anzeigevorrichtung nähert, desto besser ist eine Voraussage möglich, welches Bedienelement aktiviert werden soll. Daher ist es dann einfach möglich, dieses Bedienelement besonders optimiert auf der Anzeigevorrichtung darzustellen. Hierzu werden die dargestellten Informationen entsprechend angepasst.

Zusätzlich zu Informationen über den Nutzer werden bei einer bevorzugten Ausführungsform Informationen über einen Fahrzustand ausgewertet, um die Anpassung des Bedienelements zu optimieren. So hat beispielsweise die Fahrt über eine unebene Fahrbahnoberfläche einen Einfluss auf eine motorische Treffsicherheit des Bedienelements durch einen Nutzer. In einem solchen Fall wird das Bedienelement vorzugsweise größer dargestellt als in einer Fahrsituation auf einer ebenen glatten Fahrbahnoberfläche. Hierdurch werden eine verbesserte Bedienbarkeit und ein erhöhter Komfort gewährleistet. Gleichzeitig ist eine maximal mögliche Informationsdarstellung situationsabhängig gewährleistet. Vorzugsweise ist daher wie oben bereits erwähnt erfindungsgemäß vorgesehen, dass die Informationen, sofern keine Bedienabsicht ermittelt wird, einer Darstellung angepasst werden, die für eine visuelle Informationsübermittlung optimiert ist, beispielsweise alle Bedienelemente ausgeblendet werden oder mit einer Transparenz von 100% "dargestellt" werden. Dieses ist insbesondere bei interaktiven Bedienvorrichtungen von Vorteil, bei denen nur eine sehr begrenzte Auswahl von Informationen angezeigt werden kann, weil beispielsweise eine Anzeigefläche klein ist.

Bei einer bevorzugten Ausführungsform der Erfindung ist vorgesehen, dass beim Ermitteln der Bedienabsicht von dem Körperteil ausgeführte Gesten erkannt und ausgewertet werden, wobei das Anpassen der dargestellten Informationen entsprechend einer der jeweiligen erkannten Geste zugeordneten Anpassfunktion durchgeführt wird. Hier durch kann beispielsweise eine Bedienabsicht bei einer besonders großen Anzahl von potenziell betätigbaren Bedienelementen konkretisiert werden. Durch eine statische Geste kann beispielsweise ein Stoppsignal übermit telt werden, die eine weitere Anpassung der Bedienelemente unterbindet und eine Endauswahl ohne eine weitere skalierende Anpassung ermöglicht. Ebenso kann ein Blättern durch eine Vielzahl grafisch klein dargestellter Bedienelemente veranlasst werden, von denen eines mit einem Fokus versehen wird und für eine Bedienung vergrößert dargestellt wird. Die Anpassfunktion somit eine beliebige geeignete Änderung der dargestellten Informationen bewirken.

Als geeignete Gesten haben sich sogenannte statische Gesten, dynamische Gesten und komplexe Gesten erwiesen. Eine Ausführungsform der Erfindung sieht daher vor, dass die Gesten mindestens eine statische Geste umfassen, die anhand einer vordefinierten Körperteilhaltung erkannt wird. Eine weitere Ausführungsform sieht vor, dass die Gesten mindestens eine dynamische Geste umfassen, die anhand einer vordefinierten von dem Körperteil durchlaufenen Bahnkurve erkannt wird. Bei einer Bahnkurve kann zum einen die Form im dreidimensionalen Raum analysiert werden. Zusätzlich kann jedoch auch ergänzend die Geschwindigkeit ausgewertet werden, mit der die einzelnen Abschnitte im dreidimensionalen Raum durchlaufen werden. Schließlich ist bei noch einer anderen Ausführungsform vorgesehen, dass die Gesten mindestens eine komplexe Geste umfassen, die anhand eines Ineinanderübergehens vordefinierter statischer Gesten und/oder einer statischen Geste, die eine vordefinierte Bahnkurve durchläuft, erkannt wird. Die unterschiedlichen Ausführungsformen der Erfindung können somit nur statische, nur dynamische oder nur komplexe Gesten oder eine beliebige Kombination hiervon berücksichtigen. Das Erkennen der Gesten erfolgt mit der mindestens einen Sensoreinheit, die eine Position eines Körperteils im Raum bestimmen kann. Diese Formulierung, dass die Gesten von der mindestens einen Sensoreinheit erkannt werden, soll nicht ausdrücken, dass die Geste von einer einzelnen Sensoreinheit erkannt werden muss, wenn mehrere Sensoreinheiten vorhanden sind. Die Formulierung umfasst vielmehr auch das Erkennen der Gesten durch ein Zusammenwirken von mehreren vorhandenen Sensoreinheiten. Ob eine einzelne Sensoreinheit zum Erkennen einer Geste ausreicht, hängt von der speziellen Ausgestaltung der mindestens einen Sensoreinheit und der Geste selbst ab.

Vorteilhaft ist es, wenn die Gesten mindestens eine statische Geste umfassen, die von der mindestens eine Sensoreinheit als eine vordefinierte Körperteilhaltung erkennbar ist. Bei einer anderen Ausführungsform umfassen die Gesten mindestens eine dynamische Geste, die von der mindestens einen Sensoreinheit anhand einer vordefinierten von dem Körperteil durchlaufenen Bahnkurve erkennbar ist.

Die Informationen werden vorzugsweise so angepasst, dass jeweils ein Maximum an Informationen für eine visuelle Wahrnehmung dargestellt ist und dennoch bei einer Bedienabsicht zumindest ein Bedienelement, für das eine Bedienabsicht ermittelt ist, für eine optimale Bedien barkeit dargestellt ist. Hierbei können unterschiedlichste situative Einflüsse berücksichtigt werden.

Bei einer Ausführungsform ist vorgesehen, dass die mindestens eine Sensoreinheit ausgestaltet ist, Sensorinformationen anhand von über den Körper des Nutzers übertragene Hochfrequenzsignale zu ermitteln, die insbesondere eine Position des Körperteils umfassen können.

Die Merkmale der erfindungsgemäßen Vorrichtung weisen dieselben Vorteile wie die entsprechenden Merkmale des erfindungsgemäßen Verfahrens auf.

Nachfolgend wird die Erfindung anhand bevorzugter Ausführungsbeispiele unter Bezugnahme auf Figuren einer Zeichnung näher erläutert. Hierbei zeigen:
- Fig. 1: ein schematisches Ablaufdiagramm zur Erläuterung einer Ausführungsform eines Verfahrens zum Betreiben einer interaktiven Bedienvorrichtung;
- Fig. 2: eine schematische Darstellung, anhand derer das Prinzip einer situationsabhängigen Skalierung von Bedienelementen dargestellt ist;
- Fig. 3: schematische Ansichten einer Anzeigevorrichtung, auf der Informationen optimiert für eine visuelle Wahrnehmung oder teilweise für eine haptische Bedienung optimiert dargestellt sind;
- Fig. 4A-4D: schematische Ansichten von auf einer Anzeigevorrichtung dargestellten Informationen, die Bedienelemente umfassen, die entsprechend einem ermittelten Bedienungsspotlight zum Teil vergrößert dargestellt sind;
- Fig. 5A-5D: schematische Ansichten einer Anzeigevorrichtung, auf der die Bedienelemente in Abhängigkeit von einer Größe eines ermittelten Bedienungsspotlights skaliert sind;
- Fig. 6A-6C: schematische Ansichten einer Anzeigevorrichtung, auf der Bedienelemente unterschiedlich skaliert in Abhängigkeit von einer Bedienabsicht dargestellt sind;
- Fig. 7A-7B: schematische Ansichten einer Anzeigevorrichtung, auf der Bedienelemente einer Liste in Abhängigkeit von einer Bedienabsicht durchgeblättert werden;
- Fig. 8: eine schematische Darstellung einer interaktiven Bedienvorrichtung in einem Kraftfahrzeug ;
- Fig. 9-17: von einer Hand ausgeführte statische Gesten;
- Fig. 20-27: von einer Hand ausgeführte dynamische Gesten; und
- Fig. 28-33: von einer Hand ausgeführte komplexe Gesten.

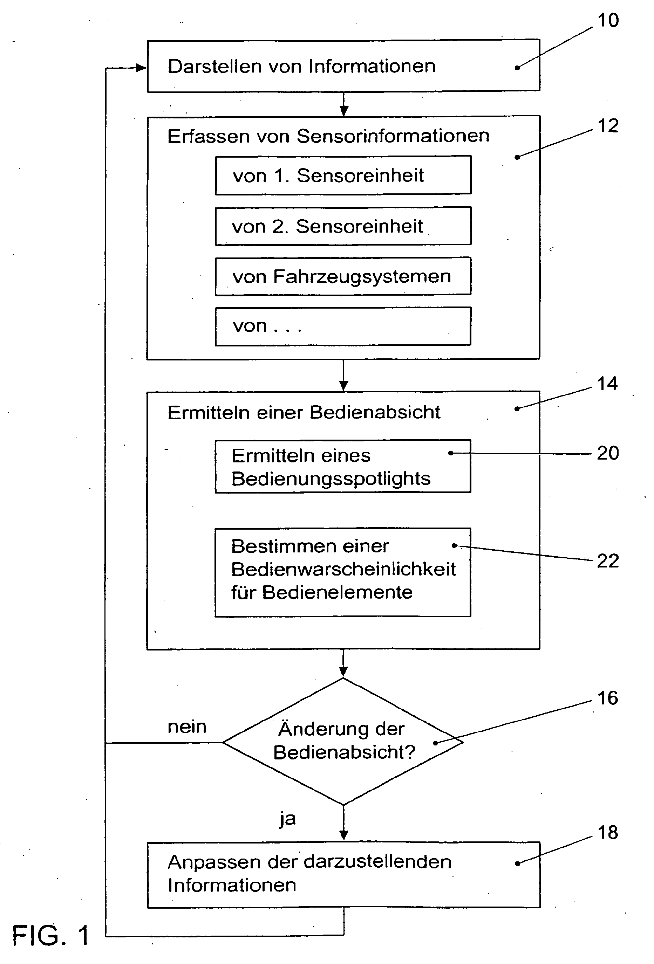

In Fig. 1 ist ein Blockdiagramm dargestellt, welches ein Verfahren 10 zum Betreiben einer interaktiven Bedienvorrichtung abbildet. Wie mittels eines Verfahrensblocks 12 dargestellt ist, umfasst das Verfahren ein Darstellen von Informationen auf einer Anzeigevorrichtung. Ein Layout für die Darstellung der Informationen ist zunächst vorzugsweise so gewählt, dass es für eine optimale visuelle Informationsvermittlung ausgelegt ist. Ein solches Layout wird im Folgenden als visuelles Layout bezeichnet.

Die Bedienvorrichtung erfasst Sensorinformationen 12. Die Sensorinformationen umfassen zum einen Informationen über einen oder mehrere Nutzer. Diese werden als Nutzerinformationen bezeichnet. Diese umfassen insbesondere Informationen über Körperaktionen des oder der Nutzer, die mittels Sensoreinheiten erfasst sind. Die Körperaktionen umfassen beispielsweise eine Armbewegung, die beispielsweise mittels einer mit Kameras detektierenden Sensoreinheit und/oder einer ultraschallbasierten Sensoreinheit ermittelt werden kann. Ferner kann mittels der mit Kameras versehenen Sensoreinheit eine Blickrichtung des oder der Nutzer erfasst werden. Ein Richten des Blicks auf die Anzeigevorrichtung stellt eine besonders wichtige Körperaktion dar, da einem Bedienvorgang zumeist ein Blick auf die Anzeigevorrichtung der interaktiven Bedienvorrichtung vorausgeht. Die erfassten Sensorinformationen umfassen vorzugsweise darüber hinaus Informationen über eine Fahrsituation oder eine Umgebung des Kraftfahrzeugs. Es hat sich gezeigt, dass bestimmten Bedienaktionen häufig bestimmte Fahrereignisse vorausgehen.

Anhand der erfassten Sensorinformationen wird anschließend eine Bedienabsicht des oder der Nutzer ermittelt 14. Zum Ermitteln einer Bedienabsicht des Nutzers werden die unterschiedlichen, in den Sensorinformationen enthaltenen Informationen, insbesondere die Nutzerinformationen, ausgewertet. Hierbei wird insbesondere das Verhalten des oder der Nutzer, d.h. seine Körperaktion oder ihre Körperaktionen, ausgewertet und bewertet. Wird beispielsweise eine Blickrichtungsänderung auf die Anzeigevorrichtung der interaktiven Bedienvorrichtung festgestellt und zeitlich damit korreliert eine Bewegung des Arms oder der Hand, die dem interaktiven Bedienelement räumlich am nächsten ist, detektiert, so kann hieraus eine Bedienabsicht abgeleitet werden. Es sind viele verschiedene Kombinationen von Einzelinformationen möglich, die ausgewertet und bewertet werden können. Beispielsweise kann eine zielgerichtete Bewegung in Richtung auf die Bedieneinheit eines Körperteils bei einer Ausführungsform Voraussetzung sein, dass eine Bedienabsicht als erkannt gilt.

Mittels einer Abfrage wird überprüft, ob eine Änderung der Bedienabsicht eingetreten ist 16. Ist dies nicht der Fall, so wird die Darstellung der Informationen auf der Anzeigevorrichtung unverändert fortgesetzt. Hat sich eine Änderung der Bedienabsicht ergeben, d.h. ist eine Bedienabsicht erkannt worden oder festgestellt worden, dass keine Bedienabsicht mehr vorliegt, so werden die Informationen, die auf der Anzeigevorrichtung dargestellt werden, entsprechend der Bedienabsicht oder nicht (mehr) vorliegenden Bedienabsicht angepasst 18.Eine Änderung liegt auch dann vor, wenn sich die Bedienabsicht (weiter) konkretisiert hat.

Besteht die Änderung der Bedienabsicht darin, dass eine Bedienabsicht eines Nutzers erkannt wird, die zuvor nicht bestand, so werden die darzustellenden Informationen so verändert, dass das Layout auf der Anzeigevorrichtung für eine haptische Bedienung optimiert ist. Es kann vorgesehen sein, dass von einer bildlichen Darstellung auf eine Textdarstellung gewechselt wird. Bei wiederum einer anderen Ausführungsform, bei der im visuellen Layout kleine Bedienelemente graphisch dargestellt sind, können die Bedienelemente im haptischen Layout vergrößert dargestellt werden. Die Anpassung kann ferner ein Verändern der Ausgestaltung der Bedienelemente, beispielsweise ein Animieren des Bedienelements (Widgets), umfassen. Bei einer Anzeigevorrichtung, die als autostereoskopische dreidimensionale Anzeigevorrichtung ausgestaltet ist, kann ein räumliches Hervortreten der Bedienelemente oder eine räumlich vorgelagerte Überlagerung der Informationsdarstellung vorgesehen sein.

Das Ermitteln und Anpassen der dargestellten Informationen erfolgt vorteilhafterweise in Stufen, die kontinuierlich ineinander übergehen können. Zunächst wird eine Bedienabsicht mittels Sensorinformationen einer ersten Sensoreinheit ermittelt. Die erste Sensoreinheit umfasst vorteilhafterweise ein bildgebendes Sensorsystem, beispielsweise ein Kamerasystem. Ist diese allgemeine Bedienabsicht erkannt, so wird von einem visuellen Layout in ein haptisches Layout gewechselt. Beispielsweise werden Bedienelemente eingeblendet, die zuvor nicht sichtbar waren.

Bei einer bevorzugten Ausführungsform ist ferner vorgesehen, dass beim Ermitteln der Bedienabsicht eine Position und ein umgebender Bereich auf der Anzeigevorrichtung ermittelt wird, der für eine Bedienhandlung, d.h. ein Aktivieren eines Bedienelements, avisiert ist. Dieser Vorgang wird als Bestimmen eines Bedienungsspotlights bezeichnet 20.

Zur Ermittlung des Bedienungsspotlights können unterschiedliche Sensorinformationen ausgewertet werden. Insbesondere werden eine Bewegungsrichtung eines Körperteils des Nutzers sowie eine Bewegungsgeschwindigkeit, eine Blickrichtung auf die Anzeigevorrichtung sowie Informationen über die Fahrsituation einzeln oder gemeinsam ausgewertet. Als Ergebnis der Bedienungsspotlightermittlung erhält man eine Position auf der Anzeigevorrichtung, die die avisierte Zielposition angibt, und einen Radius, der ein Maß für die Unsicherheit der ermittelten avisierten Zielposition ist. Bei anderen Ausführungsformen kann vorgesehen sein, dass die Form des Bedienungsspotlights nicht kreisförmig ist. Dies ist insbesondere dann von Vorteil, wenn die Bedienrichtung stark von einer Richtung einer Flächennormalen der Anzeigefläche der Anzeigevorrichtung abweicht.

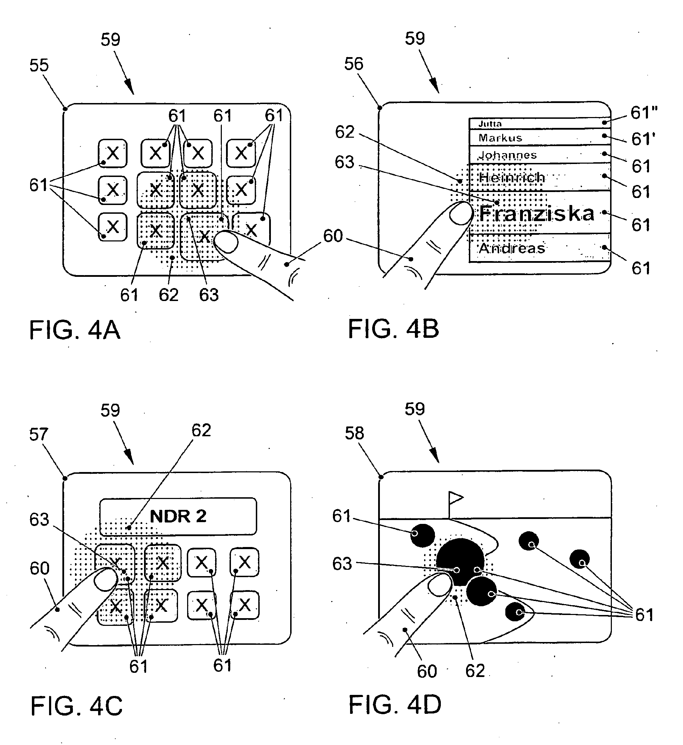

Die Informationen, die das Bedienungsspotlight charakterisieren (Position/Radius und/oder sonstige Gebietsangabe) werden beim Anpassen der darzustellen Informationen berücksichtigt. Vorzugsweise werden die Bedienelemente in Abhängigkeit vom Abstand von der Position und einem flächigen Überlapp mit dem Bedienungsspotlight skaliert dargestellt. Dies bedeutet, dass Bedienelemente, die sich nahe der Position des Bedienungsspotlights, die sich in der Mitte des Bedienungsspotlights befindet, befinden, größer skaliert werden, als solche Bedienelemente, die weiter von der Position des Bedienungsspotlights entfernt sind. Ferner werden jene Bedienelemente größer skaliert, die einen großen flächigen Überlapp mit dem Bedienungsspotlight bei einer Projektion des Bedienungsspotlights auf die Anzeigevorrichtung aufweisen. In Fig. 4A bis 4D sind Beispiele hierfür dargestellt. Auch Bedienungselemente 61', die nicht in einem Bedienungsspotlight 62 liegen, jedoch näher an dem Bedienungsspotlight 62 liegen als andere Bedienelemente 61 ", können vorteilhafterweise größer als diese anderen Bedienelemente 61" dargestellt.

Das beschriebene Verfahren stellt ein Bestimmen einer Bedienwahrscheinlichkeit für die einzelnen Bedienelemente dar 22. Diese Bedienwahrscheinlichkeiten können auch nach einem anderen Verfahren anhand der Nutzerinformation gegebenenfalls unter Berücksichtigung von anderen Informationen über situative Einflüsse, beispielsweise der Fahrsituation, bisherigen Gewohnheiten des Nutzers usw., erfolgen.

Das Bedienungsspotlight wird nun kontinuierlich angepasst. In einer weiteren Stufe werden die Bewegung des Körperteils und gegebenenfalls weitere Eigenschaften des Körperteils mittels einer zweiten Sensoreinheit genauer ermittelt.

Bei einer Ausführungsform, bei der Hochfrequenzsignale erzeugende Signalgeber in der Nähe des Nutzerkörpers angeordnet sind und Empfänger an oder um die Anzeigevorrichtung angeordnet sind, um über den Körper des Nutzers übertragene Hochfrequenzsignale zu empfangen und hieraus eine Position der Hand des Nutzers in der Nähe der Anzeigevorrichtung zu bestimmen, kann eine Feinjustage der Anpassung der dargestellten Informationen besonders gut vorgenommen werden. In einem Abstand von etwa 30 cm von der Anzeigevorrichtung können mit solchen Sensorsystemen Körperteile von Nutzern erfasst werden. Befinden sich mehrere Nutzer in der Reichweite der interaktiven Bedienvorrichtung in einem Fahrzeug, beispielsweise der Fahrer und der Beifahrer des Kraftfahrzeugs, so können diese anhand unterschiedlicher Hochfrequenzsignale unterschieden werden, die über unterschiedliche Signalgeber, welche beispielsweise in einem Fahrersitz und einem Beifahrersitz integriert sind, in den Körper des Nutzers eingekoppelt werden. Eine Skalierung oder allgemeine Anpassung der dargestellten Informationen kann somit zusätzlich angepasst an die Funktion (Fahrer/Beifahrer) des Nutzers vorgenommen werden. Beispielsweise ist es sinnvoll, weniger und dafür größere Bedienelemente auf der Anzeigevorrichtung darzustellen, wenn ein Fahrer bei hoher Geschwindigkeit des Kraftfahrzeugs Bedienelemente auf der Anzeigevorrichtung aktivieren will. Ein Beifahrer, der sich nicht auf das Führen des Kraftfahrzeugs konzentrieren muss, kann beispielsweise kleinere Bedienelemente, von denen dafür mehr auf der Anzeigevorrichtung darstellbar sind, bedienen. Um die Feinjustage auszuführen, ist vorteilhafterweise vorgesehen, dass beim Erkennen der Bedienabsicht ein Abstand des Körperteils des Nutzers von der Anzeigevorrichtung ermittelt wird. Ferner wird die Ausdehnung des Körperteils zusätzlich ermittelt. Diese wird bei der Skalierung und/oder Ausgestaltung des oder der Bedienelemente mitberücksichtigt. Für einen Nutzer mit großen, breiten Fingern müssen die Bedienelemente flächig größer dargestellt sein als für einen Nutzer mit kleinen, schmalen Fingern. In der weiteren Stufe ist somit eine feinere Anpassung möglich. Es können mehr als zwei Stufen vorgesehen sein. Die zweite Sensoreinheit kann auch eine ultraschallbasierte Sensoreinheit sein.

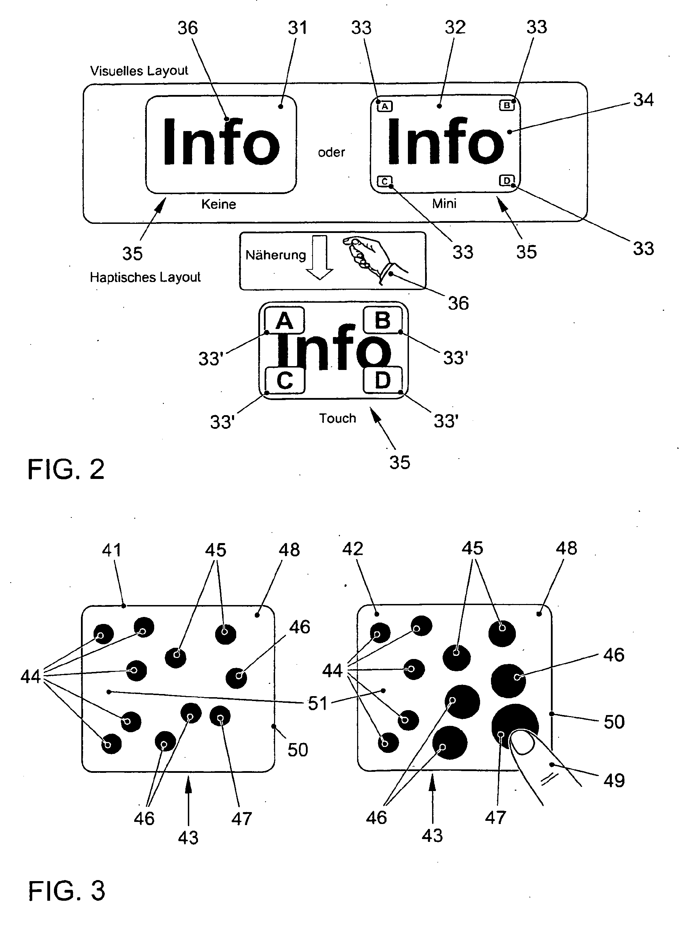

In Fig. 2 ist die Umschaltung von einem visuellen auf ein haptisches Layout schematisch dargestellt. Im oberen Bereich der Fig. 2 sind zwei mögliche Ausgestaltungen einer Informationsdarstellung 31, 32 in einem so genannten visuellen Layout gezeigt. Bei der linken, nicht erfindungsgemäßen Darstellung 31 sind keine Bedienelemente dargestellt. In der rechten Darstellung 32 sind kleine Bedienelemente 33 vorgesehen. Der größte Bereich 34 der Anzeigevorrichtung 35 ist zur Darstellung der Informationen vorgesehen. Nähert sich ein Körperteil 36, hier eine Hand, der Anzeigevorrichtung 35, wie es in der Mitte der Fig. 2 angedeutet ist, werden die dargestellten Informationen so verändert, dass die Bedienelemente 33' vergrößert dargestellt sind, eine zusätzliche textliche Information (A, B, C, D) umfassen und zumindest gegenüber der Darstellung 31 oben links in ihrem Transparenzniveau verändert sind. Das haptische Layout ist so optimiert, dass die Bedienelemente 33' optimal von einem Finger berührt werden können, um eine mit dem Bedienelement 33' verknüpfte Bedienaktion aktivieren und auslösen zu können.

In Fig. 3 ist ein weiteres Beispiel für die Umschaltung von einem visuellen Layout 41 auf ein haptisches Layout 42 dargestellt. Auf der Anzeigevorrichtung 43 sind Punkte besonderen Interesses (points of interest - POI) 44-47 einer Kartenansicht 48 eines Navigationssystems schematisch dargestellt. Nähert sich ein Finger 49 der Anzeigevorrichtung 43 mit einer Bewegung, die unten auf den rechten Rand 50 der Anzeigevorrichtung zielt, so werden die Punkte von Interesse in Abhängigkeit von einem Abstand von dem unteren Ende des rechten Rands 50 hinsichtlich ihrer flächigen Größe skaliert. Um eine bessere Bedienbarkeit zu erreichen, werden einige Punkte 46, 47 leicht gegenüber ihrer ursprünglichen Position verschoben. In einem linken Abschnitt 51 der Karteansicht 48 ist das Layout immer noch für eine visuelle Informationsvermittlung angepasst.

In den Fig. 4A bis 4D sind unterschiedliche Darstellung 55-58 von Informationen auf Anzeigevorrichtung 59 dargestellt. Zusätzlich zu einem Finger 60, der jeweils eines der Bedienelemente 61 bedienen will, ist ein so genanntes Bedienungsspotlight 62 kreisförmig auf der Anzeigevorrichtung 59 eingezeichnet. Die Bedienelemente 61 sind in Abhängigkeit von ihrer Lage relativ zu der Position 63 (der Mitte) des Bedienungsspotlights 62 und einem flächigen Überlapp mit dem Bedienungsspotlight 62 skaliert. Die Gesamtgröße der Skalierung kann abhängig von einer Fahrsituation sein. Fährt das Fahrzeug beispielsweise auf einer unebenen Oberfläche mit hoher Geschwindigkeit, so müssen die Bedienelemente größer skaliert werden, als bei einer Fahrt auf ebener Fahrbahn mit geringer Geschwindigkeit. Das Bedienungsspotlight 62 ist nur virtuell existent und wird in der Regel nicht auf der Anzeigevorrichtung 59 dargestellt. Das Bedienungsspotlight 62 ist hier nur zur Veranschaulichung dargestellt.

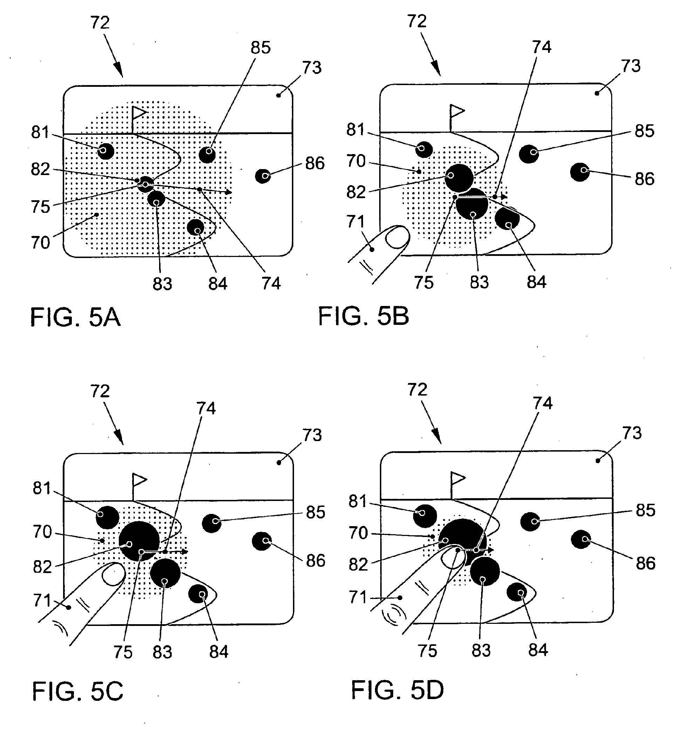

In Fig. 5A bis 5D ist dargestellt, wie sich das Bedienungsspotlight 70 bei einer Annäherung eines Fingers 71 an die Anzeigevorrichtung 72 verändert und wie dieses die Skalierung der Bedienelemente bei einer bevorzugten Ausführungsform beeinflusst. Die in den Fig. 5A bis 5D dargestellten Ansichten 73 einer Anzeigevorrichtung 72 zeigen jeweils eine Navigationskarte mit Punkten von Interesse 81-86, die Bedienelemente sind. In Fig. 5A ist ein haptisches Layout gewählt, bei dem die Punkte von Interesse 61-65, die in dem Bedienungsspotlight 70 liegen, größer dargestellt sind als der Punkt von Interesse 86, welcher außerhalb des Bedienungsspotlights 70 liegt. Die Ansicht 73 nach Fig. 5A entspricht einer Darstellung, bei der die bedienende Hand noch weit von der Anzeigevorrichtung 72 entfernt ist. Daher ist in Fig. 5A noch kein Finger dargestellt. Bei einer Annäherung des Fingers 71 verringert sich ein Radius 74 des Bedienungsspotlights 70, so dass das Bedienungsspotlight 70 in Fig. 5B kleiner dargestellt ist. Die nahe einer Position 75 (dem Zentrum) des Bedienungsspotlights 70 befindlichen Bedienelemente 82, 83 sind am größten skaliert. Jedoch ist auch der Punkt von Interesse 86 gegenüber seiner Darstellung in Fig. 5A größer skaliert. Bei einer weiteren Annäherung des Fingers 71 ergibt die Analyse der Bewegungsrichtung des Fingers 71, dass sich die Position 75 des Bedienungsspotlights 70 leicht verschoben hat. Daher ist in Fig. 5C der Punkt von Interesse 82 größer skaliert als der Punkt 83, der nun weiter entfernt von der Mittelposition 75 des Bedienungsspotlights 70 liegt. In Fig. 5D ist die Situation dargestellt, in der sich der Finger 71 in einem Aktivierungsbereich befindet, der relativ zu der Darstellung des Bedienelements festgelegt ist. Bei einer als Touchscreen ausgebildeten interaktiven Bedienvorrichtung ist dies in der Regel die Fläche der graphischen Darstellung. Bei einer Bedienvorrichtung mit einem berührungslos arbeitenden Sensor kann dies ein räumliches Gebiet sein, das vorzugsweise in einem kurzen Abstand vor der graphischen Darstellung des Bedienelements oder angrenzend an diese festgelegt ist.

Befindet sich der Körperteil, hier der Finger 71, in dem Aktivierungsbereich, so wird die Bedienaktion, die dem Bedienelement zugeordnet ist, aktiviert.

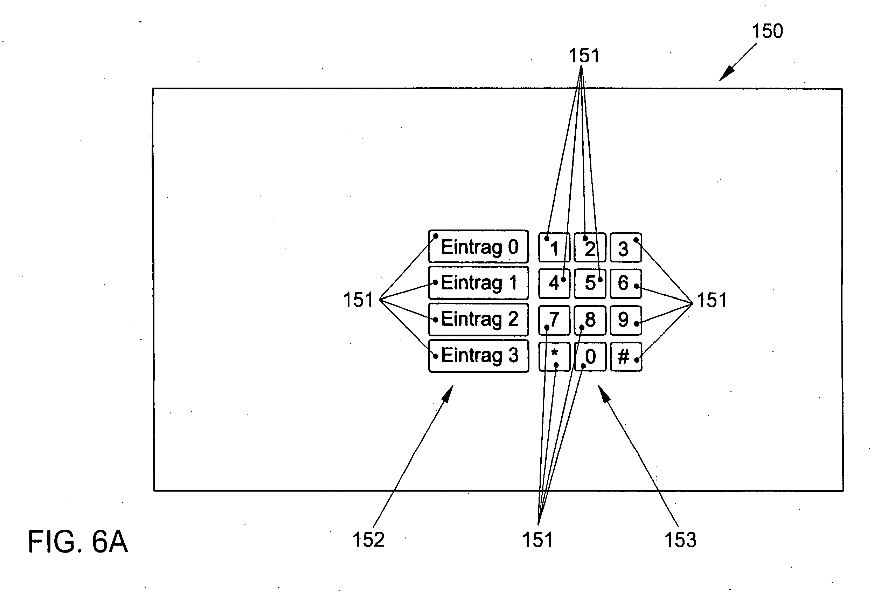

In Fig. 6A ist eine schematische Ansicht einer Anzeigevorrichtung 150 dargestellt, auf der Bedienelemente 151 in zwei Gruppen 152, 153 angeordnet sind. In der ersten Gruppe 152 sind die zugehörigen Bedienelemente 151 als Liste angeordnet. In der zweiten Gruppe sind die Bedienelemente 151 als Zahlenfeld angeordnet. In der Fig. 6A nehmen die Bedienelemente 151 der beiden Gruppen 152, 153 nur eine geringe Fläche auf der Anzeigevorrichtung 150 ein. Ein Großteil der Fläche kann zur Darstellung von weiteren Informationen (nicht dargestellt) verwendet werden.

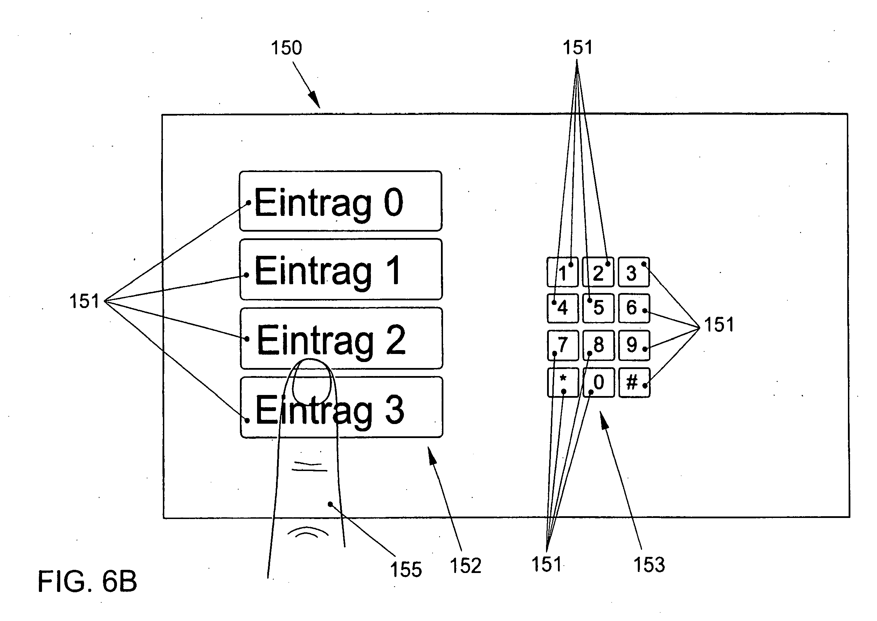

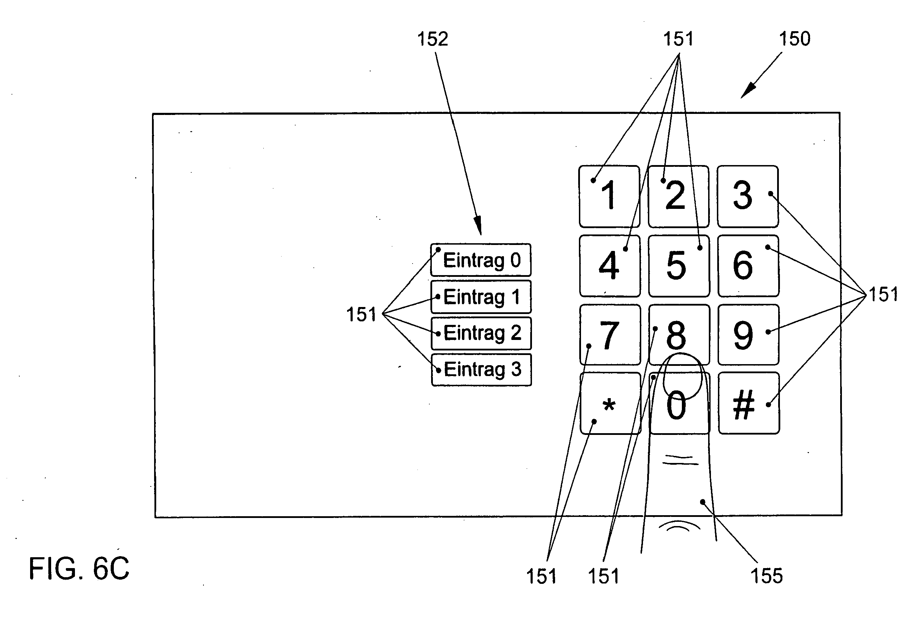

Nähert sich ein Finger 155 der Anzeigevorrichtung 150, so werden die Bedienelemente 151 in einer der beiden Gruppen 152, 153 vergrößert dargestellt. Wird eine Bedienabsicht für eines der Bedienelemente 151 der als Liste ausgestalteten ersten Gruppe 152 ermittelt, so wird die Liste vergrößert dargestellt, wie dies in Fig. 6B gezeigt ist. Nähert sich der Finger 155 eher der als Zahlenfeld ausgestalteten zweiten Gruppe 153 von Bedienelementen 151, so werden diese Bedienelemente vergrößert dargestellt, wie in Fig. 6C gezeigt ist.

Während bei der in Zusammensetzung mit Fig. 5A bis 5D beschriebenen Ausführungsform die Mittelpunkte der Bedienelemente vorzugsweise nicht auf der Anzeigevorrichtung verschoben werden, werden bei der hier in Zusammenhang mit Fig. 6A-6C beschriebenen Ausführungsform die Positionen der Bedienelemente deutlich verändert.

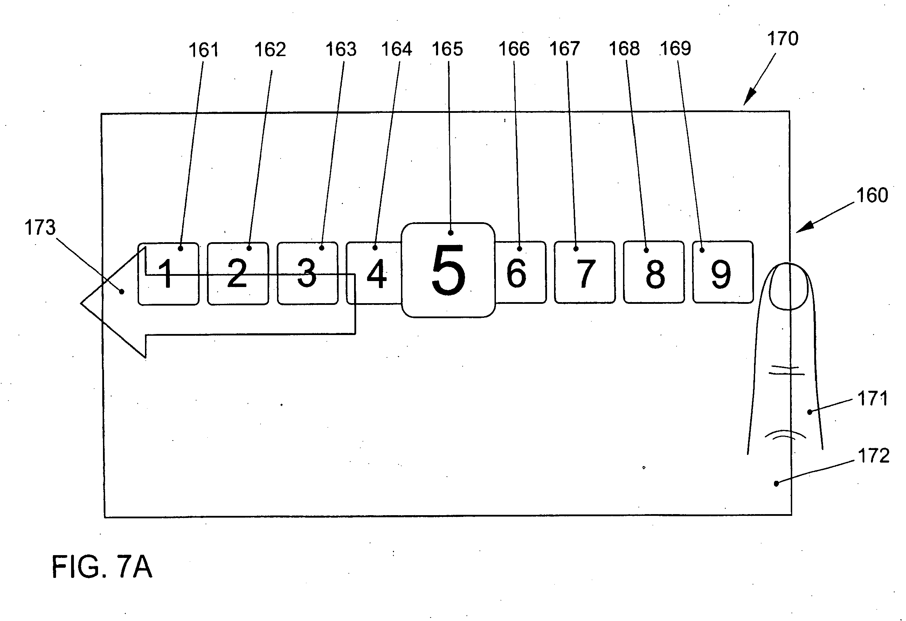

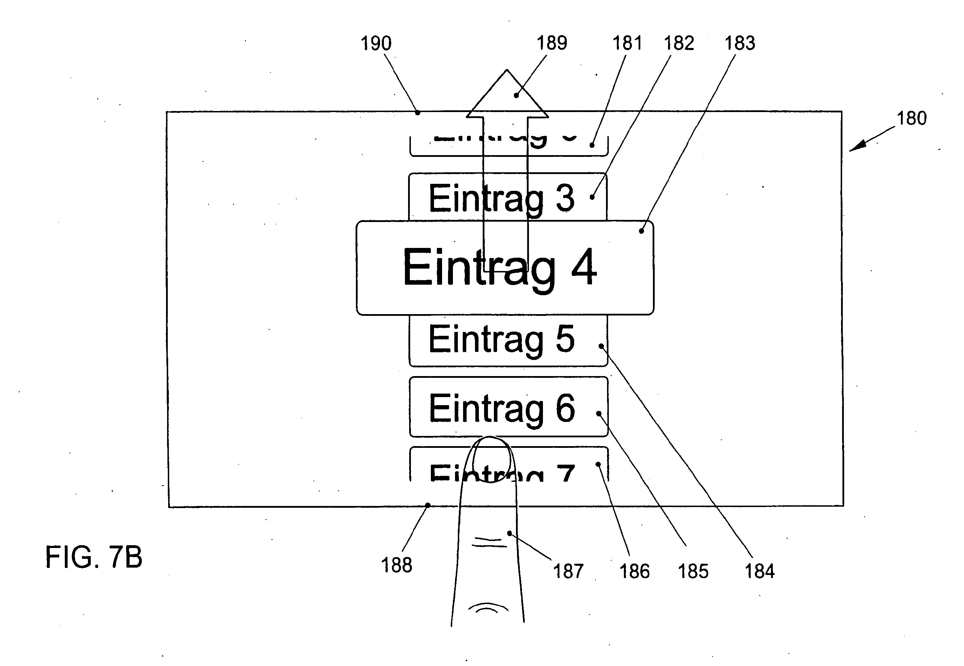

Anhand von Fig. 7A und 7B wird beschrieben, wie eine ermittelte Bedienabsicht vorteilhaft ausgenutzt werden kann, um ein Bedienelement aus einer Liste auszuwählen.

In Fig. 7A ist eine horizontale Liste 160 von Bedienelementen 161-169 auf einer Anzeigevorrichtung 170 dargestellt. Wird eine Bedienabsicht ermittelt, so wird einem der Bedienelemente 165 der Liste 160 ein Fokus zugewiesen. In diesem Fall ist dem mit der Ziffer "5" beschrifteten Bedienelement 165 der Fokus zugewiesen. Diese Tatsache wird dadurch kenntlich gemacht, dass das Bedienelement 165 vergrößert dargestellt ist. In der Regel wird der Fokus einem in der Mitte der Anzeigevorrichtung 170 dargestellten Bedienelement der Liste 160 zugewiesen. Alternativ kann der Fokus auch einem an einem Rand dargestellten Bedienelement zugewiesen werden.

Der Fokus kann "verschoben" werden, indem der Nutzer seinen Finger 171 an einen Rand der Anzeigevorrichtung 170 bewegt. In Fig. 7A befindet sich der Finger 171 an einem rechten Rand 172 der Anzeigevorrichtung 170. Hierdurch kann bei einer Ausführungsform der Fokus nach rechts verschoben werden.

Alternativ ist bevorzugter vorzusehen, dass der Fokus im Zentrum der Anzeigevorrichtung 170 verbleibt und die Bedienelemente 161-169 relativ zu dem Fokus verschoben werden. D. h., die Bedienfelder bewegen sich nach links, wie mittels eines Pfeils 173 angedeutet ist. Dies bedeutet, dem Bedienfeld 166 mit der Zahl "6" wird der Fokus als nächstes zugewiesen, wobei das Bedienfeld 166 dabei vergrößert in der Mitte der Anzeigevorrichtung 170 dargestellt wird.

In beiden Ausführungsformen scrollt oder blättert der Fokus durch die Liste der Bedienelemente.

Dieser Vorgang kann beendet werden, indem der Finger 171 über die Mitte der Anzeigevorrichtung 170 bewegt wird. Anschließend kann das Bedienelement, dem der Fokus zugewiesen ist, betätigt werden, um die zugeordnete Bedienaktion auszulösen.

Die Scroll- oder Blättergeschwindigkeit kann in Abhängigkeit von der Position des Fingers 171 variieren. D. h., je weiter der Finger aus dem Zentrum bewegt wird, desto schneller wird gescrollt/geblättert.

Die Blätter-/Scrollrichtung kann mit der Richtung zusammentreffen, in der der Finger bewegt wird oder entgegengesetzt sein. Bei einer Liste kann ferner vorgesehen sein, dass diese als endlos betrachtet wird. Dies bedeutet, dass sich an ein letztes Listenelement das erste Listenelement erneut anschließt.

In Fig. 7B ist eine Anzeigevorrichtung 180 dargestellt, auf der eine Liste von Bedienelementen 181-186 gezeigt ist. Nähert sich ein Finger 187 der Anzeigevorrichtung 180, so wird einem der Bedienelemente 181-186 ein Fokus zugeordnet. Das Bedienelement 183, dem der Fokus zugeordnet ist, ist vergrößert für eine optimale Betätigung dargestellt. Der Finger 187 befindet sich an einem unteren Rand 188 der Anzeigevorrichtung 180. Hierdurch wird bewirkt, dass sich die Bedienelemente 181-186 "durch den Fokus" nach oben bewegen, wie mittels des Pfeils 189 angedeutet ist. Wird der Finger 187 in eine Mitte der Anzeigevorrichtung 180 bewegt, stoppt der Blättervorgang. Das Bedienelement im Fokus kann optimal betätigt werden. Wird der Finger 187 in eine Position zwischen den Fokus und einem oberen Rand 190 der Anzeigevorrichtung 180 bewegt, so bewegen sich die Bedienelemente 181-186 nach unten. Somit kann in beide Richtungen geblättert werden.

Der Fokus muss nicht starr an einer Position auf der Anzeigevorrichtung verharren. Vielmehr kann er sich mit dem Bedienelement bewegen, dem er zugeordnet ist. Ist dieses Bedienelement von einer vorfestgelegten Sollposition des Fokus weiter entfernt als das nachfolgende Bedienelement der Liste, so springt der Fokus auf dieses nachfolgende Bedienelement.

Andere Ausführungsformen können vorsehen, dass mehrere Bedienelemente vergrößert dargestellt sind. Beispielsweise können ein Hauptfokus und zwei Nebenfokusse vorgesehen sein. Die den Nebenfokussen zugeordneten Bedienelemente werden beispielsweise vergrößert, jedoch etwas kleiner als das dem Hauptfokus zugewiesene Bedienelement dargestellt.

Bei einer Ausführungsform kann vorgesehen sein, dass ein Bedienelement, für das die höchste Bedienwahrscheinlichkeit ermittelt ist (beispielsweise das Bedienelement, das sich im festen Fokus oder dem Zentrum des Bedienungsspotlights befindet), betätigt wird, wenn der Körperteil des Nutzers, beispielsweise der Finger, unverändert eine vorgegebene Verweildauer verharrt, ohne dass eine Anpassung der dargestellten Information erfolgt. Dies gilt insbesondere auch dann, wenn der Finger sich nicht in dem eigentlichen Aktivierungsbereich des Bedienelements befindet. Hierdurch kann eine quasi betätigungslose Bedienung eines Bedienelements erreicht werden.

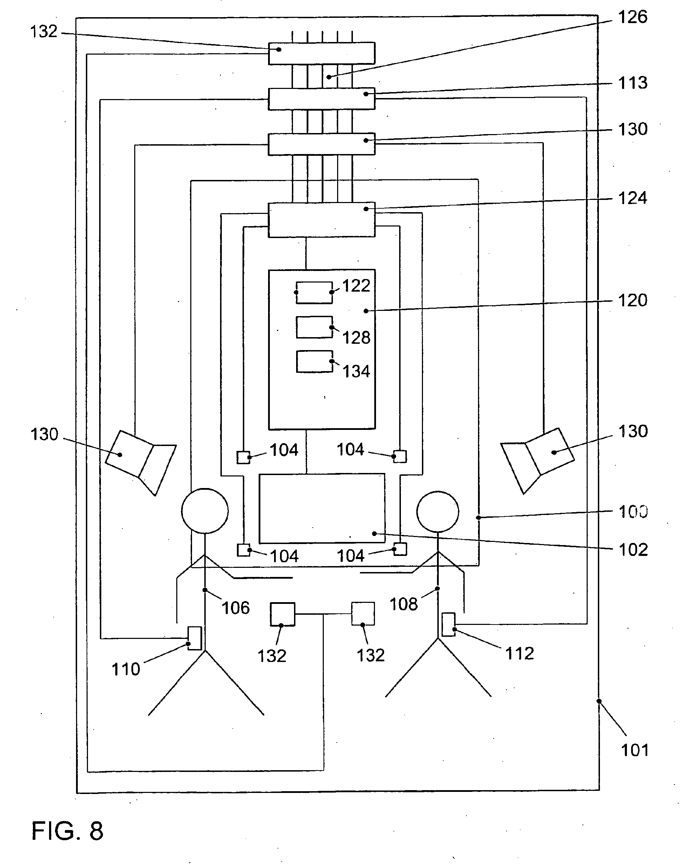

In Fig. 8 ist schematisch eine Ausführungsform einer interaktiven Bedienvorrichtung 100 in einem Kraftfahrzeug 101 dargestellt. Diese umfasst eine Anzeigevorrichtung 102, auf der Informationen in einem visuellen und einem haptischen Layout dargestellt werden können. In die Bedienvorrichtung 100 sind Empfangssensoren 104 integriert, die über einen Körper 106, 108 eines Nutzers übertragene Hochfrequenzsignale berührungslos empfangen können, die in die Körper mittels Signalgebern 110, 112, die in der Nähe der Körper 106, 108 angeordnet sind, eingespeist werden. Die Signalgeber 110, 112 sind mit einer Signalgebereinheit 113 verbunden, die wiederum mit einem Fahrzeugbussystem 126 gekoppelt ist. Die Signalgebereinheit 113 kann gemeinsam mit den Empfangssensoren 104, die im engeren Sinne bereits eine Sensoreinheit darstellen, auch als ein Sensorsystem bzw. eine Sensoreinheit betrachtet werden. Die interaktive Bedienvorrichtung 100 umfasst ferner eine Steuereinheit 120, die ein Darstellungsmodul 122 umfasst. Das Darstellungsmodul 122 bereitet auf der Anzeigevorrichtung 102 darzustellende Informationen auf. Insbesondere passt das Darstellungsmodul 122 die Informationen an ein visuelles oder haptisches Layout an. Die interaktive Bedienvorrichtung 100 umfasst ferner eine Empfangseinheit 124, die beispielsweise über das Fahrzeugbussystem 126 Informationen von Sensoreinheiten, die beispielsweise als Kamerasystem 130 oder als Ultraschallsensorsystem 132 ausgebildet sein können, empfängt. Ferner empfängt die Empfangseinheit 124 über das Fahrzeugbussystem 126 Informationen über einen Fahrzustand des Kraftfahrzeugs 101. Anhand der empfangenen Sensorinformationen, die Informationen über den Fahrzustand umfassen, wird von einem Auswertemodul 128 die Bedienabsicht des Nutzers 106 bzw. 108 ermittelt. In Abhängigkeit von der ermittelten Bedienabsicht ändert das Darstellungsmodul 122 die Informationen, die auf der Anzeigevorrichtung 102 dargestellt werden. Das Auswertemodul 128 ist vorzugsweise so ausgestaltet, dass ein Bedienungsspotlight und für die einzelnen Bedienelemente eine Bedienwahrscheinlichkeit ermittelt wird.

Die Steuereinheit umfasst ferner ein Aktivierungsmodul 134, das eine Bedienaktion auslöst bzw. aktiviert, wenn ein Körperteil, beispielsweise ein Finger, sich in einem Aktivierungsbereich, der relativ zu der Darstellung des Bedienelements auf der Anzeigevorrichtung 102 festgelegt ist, befindet. Hierbei können Signale über den Fahrzeugbus übertragen werden, die andere Steuergeräte des Kraftfahrzeugs 101 beeinflussen.

Die Steuereinheit 120 und die einzelnen umfassten Module 122, 128, 134 können sowohl in Hard- als auch in Software ausgeführt sein.

Die Anzeigevorrichtung kann als Projektionsanzeige ausgebildet sein, bei der die dargestellten Informationen auf eine Fläche projiziert werden. In einem solchen Fall ist der Abstand bzw. die die Bewegung des Körperteils relativ zu dieser Fläche bzw. ein Blicken auf diese Fläche etc. relevant.

Bei den Sensoreinheiten, die Hochfrequenzsignale über den menschlichen Körper übertragen, haben sich Frequenzen im Bereich von etwa 80 kHz bis 150 kHz als besonders geeignet erwiesen. Die Sensoreinheiten können jedoch auch bei Frequenzen außerhalb dieses angegebenen Frequenzbereichs betrieben werden.

Neben oder alternativ zu einer Sensoreinheit, die einen Körperteil aufgrund der Übertragung von Hochfrequenzsignalen über den menschlichen Körper detektiert, können andere berührungslos funktionierende Sensoreinheiten verwendet werden, wie ultraschallbasierte Sensoreinheiten oder auch Sensoreinheiten, die optische Verfahren verwenden. Eine solche Sensoreinheit kann beispielsweise gemäß folgendem Prinzip ausgestaltet sein. Eine Sende-LED strahlt, ein rechteckförmig amplitudenmoduliertes Lichtsignal im optischen oder infraroten Wellenlängenbereich ab. Das an einem Objekt reflektierte Lichtsignal wird von einer Photodiode erfasst. Von einer Kompensations-LED wird ein um 180° phasenversetztes ebenfalls rechteckförmig amplitudenmoduliertes Referenzlichtsignal zu der Photodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Photodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen.

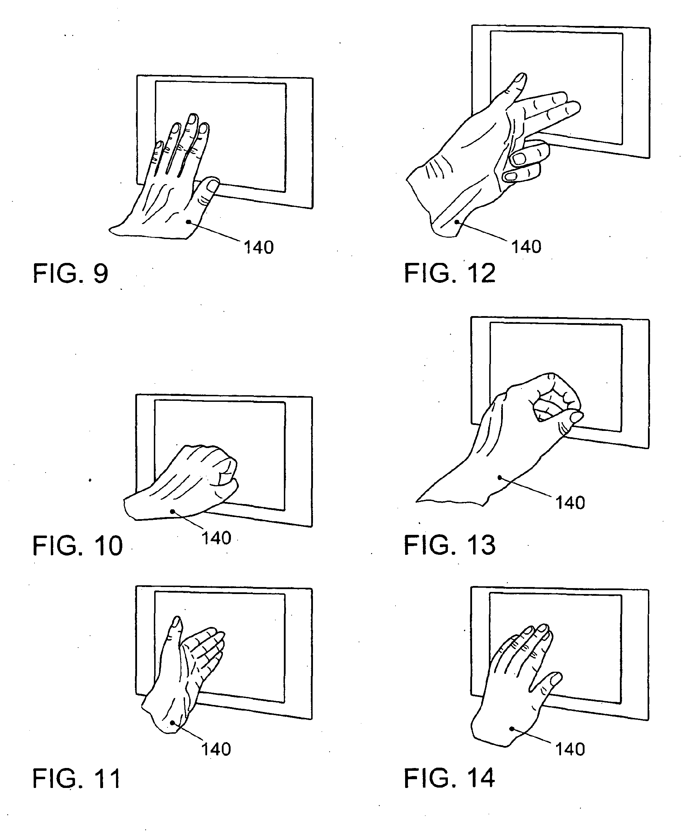

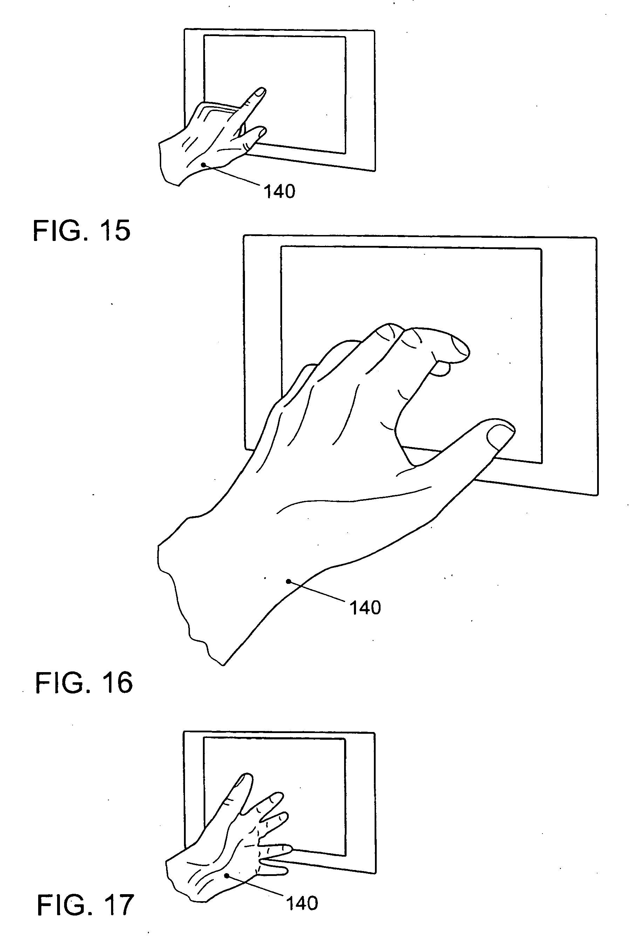

Vorteilhafterweise ist mindestens eine Sensoreinheit oder sind mehrere Sensoreinheiten so ausgestaltet, dass sie eine flächige Ausdehnung des Körperteils (gegebenenfalls durch gemeinsames Zusammenwirken) wahrnehmen können. Hierdurch wird es möglich Gesten, die mit dem Körperteil, beispielsweise einer Hand, ausgeführt werden, zu detektieren und als Bedienabsicht zu interpretieren. Gesten, die nur von der Körperteilhaltung, insbesondere einer Handhaltung, abhängig sind, werden als starre oder statische Gesten bezeichnet. Eine flach vor die Anzeigevorrichtung gehaltene Hand 140, wie sie in Fig. 9 dargestellt ist, kann beispielsweise als Stoppsignal interpretiert werden, die einen Blättervorgang anhält oder jede Anpassung der dargestellten Informationen für eine vorgegebene Zeitspanne unterbindet. Fig. 10 und 11 zeigen exemplarisch andere einfache statische Gesten, die jeweils mit der linken Hand 140 ausgeführt sind. Können mehrere Bestandteile der Hand getrennt aufgelöst werden, so können auch differenzierte starre Gesten erkannt und verwendet werden, wie sie beispielhaft in Fig. 12 bis 17 gezeigt sind.

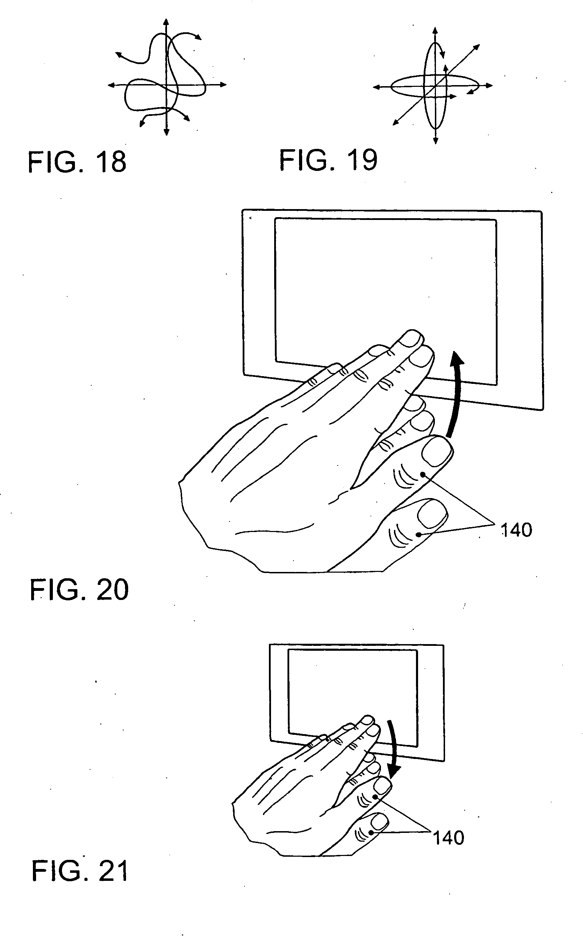

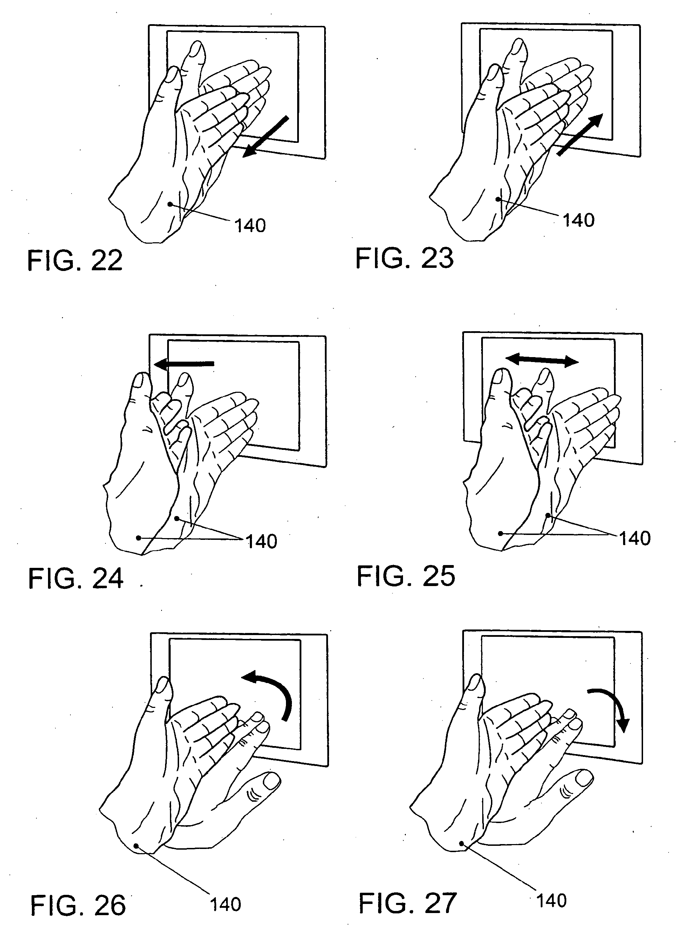

Wird die Bewegung des Körperteiles in einem bestimmten Raumgebiet mit vorgegebenen Bahnkurven verglichen, so können dynamische Gesten erkannt werden. Beispiele für Bahnkurven, in einer zweidimensionalen Ebene sind in Fig. 18 und in einem dreidimensionalen Raum in Fig. 19 exemplarisch gezeigt. Beispiele für dynamische Gesten sind in den Fig. 20 bis 27 dargestellt. Die Geste nach Fig. 20 umfasst ein Bewegen der horizontal flach ausgestreckten Hand 140 aufwärts, die Geste nach Fig. 21 entsprechend ein Bewegen der Hand 140 abwärts. In Fig. 22 bis Fig. 25 werden die Gesten durch ein Bewegen der vertikal flach aufgespannten Hand von der Anzeigevorrichtung weg (Fig. 22) bzw. auf die Anzeigevorrichtung zu (Fig. 23) und ein Bewegen nach links (Fig.24) oder ein Bewegen nach rechts (Fig. 25) ausgeführt. Eine Annäherungs- und/oder eine Entfernungsgeschwindigkeit des Körperteils können entsprechend ebenfalls interpretiert und verwendet werden. Die in den Figuren 26 und 27 zeigen Gesten, die mittels eines Drehens der Hand 140 entgegen bzw. mit dem Uhrzeigersinn der ausgestreckten Hand um ihre Längsachse ausgeführt werden. Die Gesten können auch jeweils beide entgegen gesetzten Bewegungsrichtungen umfassen. Bei einer Analyse der Bahnkurven können neben den durchlaufenen Raumpunkten, die eine Bewegung definieren, auch eine Geschwindigkeit berücksichtigt werden, mit der die Bewegung ausgeführt wird.

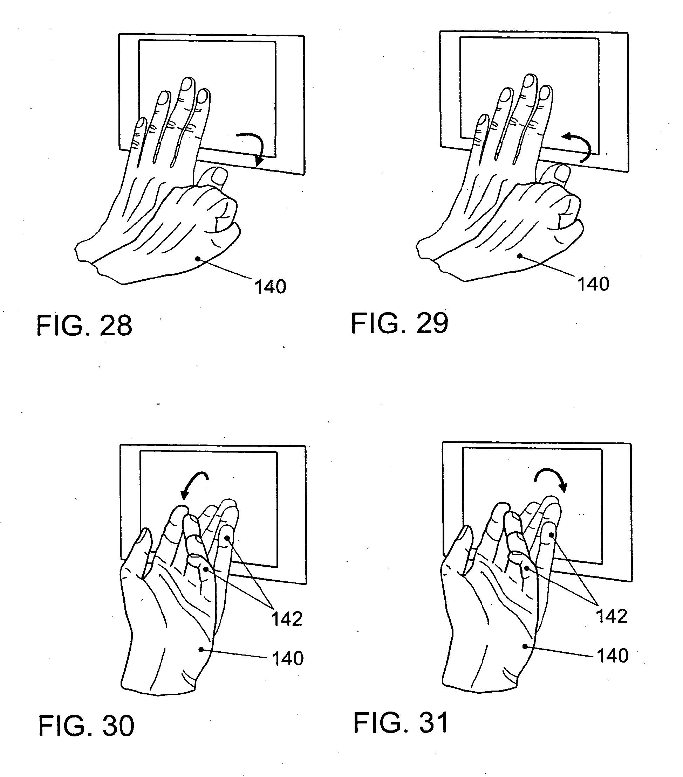

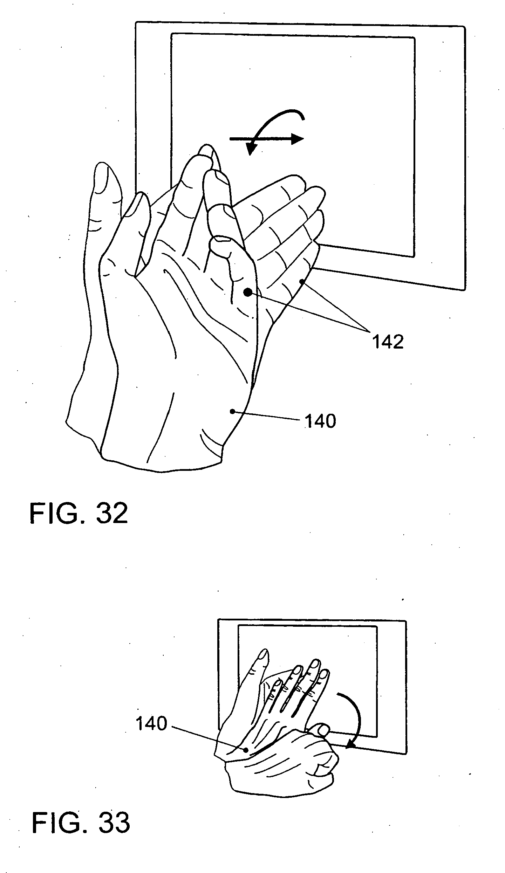

Können mehrere Bestandteile der Hand getrennt aufgelöst werden und/oder deren Relativgeschwindigkeiten erfasst werden, so können auch komplexe Gesten oder Handhaltungen sowie Bewegungsabläufe, beispielsweise ein Aufspreizen und Schließen der Finger einer flachen Hand oder ein Ballen der Finger zu einer Faust (Fig. 28) und ein Öffnen der Faust (Fig. 29) ausgewertet werden und entsprechend berücksichtigt werden. Weitere komplexe Gesten sind exemplarisch in den Fig. 30 und 31 gezeigt, bei denen ein Ausführen der entsprechenden Geste ein Einklappen der Finger 142 (Fig. 30) und ein Ausstrecken der Finger 142 (Fig. 31) umfasst. In Fig. 32 ist eine komplexe Geste dargestellt, bei der ein Schwerpunkt der Hand 140 zusätzlich zum Einklappen der Finger 142 eine Bewegung nach rechts ausführt. In Fig. 33 umfasst die komplexe exemplarisch gezeigte Geste ein Ballen der ursprünglich vertikal ausgerichteten, flach ausgestreckten Hand 140 und eine zeitgleich ausgeführte Rotation der Hand um etwa 90° nach rechts.

Die dargestellten Gesten sind nur exemplarische Gesten. Den einzelnen Gesten können unterschiedliche Bedienabsichten zugeordnet sein, die eine entsprechende Anpassung der dargestellten Informationen bewirken.

Vorteilhafterweise ist vorgesehen, dass die interaktive Bedienvorrichtung in einem Lernmodus betreibbar ist, und so in der Lage ist, bestimmte Gesten in der individuellen Ausprägung durch unterschiedliche Personen zu erlernen. Beispielsweise kann ein Fahrer aufgefordert werden, bestimmte Gesten auszuführen. Anhand der während der Ausführung erfassten Messdaten kann eine individuelle Ausprägung der Geste erlernt werden. Das Erlernen geschieht vorteilhafterweise personenbezogen. Eine Personenidentifikation kann über die Ausprägung der Gesten selbst erfolgen oder über eine beispielsweise in einem Fahrzeugschlüssel codierte Benutzer- oder Fahrerkennung.

Einige Ausführungsformen sind so ausgestaltet, dass Gesten eines Fahrers von denen eines Beifahrers unterschieden werden. Ist die interaktive Bedienvorrichtung in einer Mittelkonsole des Fahrzeugs angeordnet, so können Gesten des Fahrers von denen eines Beifahrers daran erkannt werden, ob die Gesten mit einer rechten oder linken Hand ausgeführt werden., wobei angenommen ist, dass der Fahrer und der Beifahrer zum Bedienen jeweils die Hand nehmen, die der Mittelkonsole am nächsten ist. Bei Sensoreinheiten, die eine Unterscheidung des Fahrers und Beifahrers ermöglichen, beispielsweise indem unterschiedliche Hochfrequenzsignale über den Körper des Fahrers und des Beifahrers übertragen werden, die von den Sensoreinheiten zur Positionserfassung des Körperteils genutzt werden, ist eine Unterscheidung von Gesten des Beifahrers und des Fahrers mittels der Informationen der Sensoreinheit möglich. Ist eine Unterscheidung möglich, so können derselben Geste unterschiedliche Bedienabsichten oder unterschiedliche Darstellungsfunktionen oder Anpassfunktionen für den Fahrer und den Beifahrer zugeordnet sein.

## Patentansprüche

1. Verfahren zum Betreiben einer interaktiven Bedienvorrichtung (100) in einem Kraftfahrzeug (101) mit einer Anzeigevorrichtung (35; 43; 59; 72; 102; 150; 170; 180) und auf der Anzeigeeinrichtung (35; 43; 59; 72; 102; 150; 170; 180) dargestellten und/oder darstellbaren Informationen, die Bedienelemente (33; 61; 151; 161-169; 181-186) beinhalten, umfassend folgende Schritte:
Ermitteln einer Bedienabsicht für mindestens eines der auf der Anzeigeeinrichtung (35; 43; 59; 72; 102; 150; 170; 180) dargestellten oder darstellbaren Bedienelemente (33; 61; 151; 161-169; 181-186), wobei die Bedienabsicht für das mindestens eine Bedienelement (33; 61; 151; 161-169; 181-186) zeitlich vor einem Aktivieren der Bedienaktion ermittelt wird,
**dadurch gekennzeichnet, dass**
die auf der Anzeigevorrichtung (35; 43; 59; 72; 102; 150; 170; 180) dargestellten Informationen in Abhängigkeit der ermittelten Bedienabsicht angepasst werden, so dass das mindestens eine Bedienelement (33; 61; 151; 161-169; 181-186) optimiert für das Aktivieren des mindestens einen Bedienelements (33; 61; 151; 161-169; 181-186) dargestellt wird,
wobei beim Ermitteln der Bedienabsicht eine Bedienwahrscheinlichkeit für das Bedienelement (33; 61; 151; 161-169; 181-186) und gegebenenfalls weitere Bedienwahrscheinlichkeiten für weitere Bedienelemente (33; 61; 151; 161-169; 181-186) ermittelt werden und eine Anpassung der dargestellten Informationen so erfolgt,
dass das Bedienelement oder gegebenenfalls die weiteren Bedienelemente entsprechend ihrer Bedienwahrscheinlichkeit optimiert für eine Aktivierung der entsprechend zugeordneten Bedienaktion oder weiteren Bedienaktion dargestellt werden,
wobei die auf der Anzeigeeinrichtungen dargestellten Informationen, sofern keine Bedienabsicht ermittelt wird, für eine Darstellung angepasst werden, die für eine visuelle Informationsübermittlung optimiert ist,
und das optimierte Darstellen für das Aktivieren
- ein Einblenden oder ein Erniedrigen einer Transparenz des mindestens einen Bedienelements (33; 61; 151; 161-169; 181-186) und/oder
- ein Vergrößern des mindestens einen Bedienelements (33; 61; 151; 161-169; 181-186) und/oder
- ein Verändern einer Darstellungsposition des mindestens einen Bedienelements (33; 61; 151; 161-169; 181-186) und/oder
- ein Verändern eines relativen Abstands des mindestens einen Bedienelements von weiteren Bedienelementen und/oder
- eine Animation des Bedienelements (33; 61; 151; 161-169; 181-186) umfasst und
das optimierte Darstellen für die visuelle Informationsübermittlung
- ein Ausblenden oder Erhöhen der Transparenz des mindestens einen Bedienelements (33; 61; 151; 161-169; 181-186) und/oder
- ein Verkleinern des mindestens einen Bedienelements (33; 61; 151; 161-169; 181-186)
umfasst.

2. Verfahren nach Anspruch 1, **dadurch gekennzeichnet, dass** zur Ermittlung der Bedienabsicht für mindestens eines der auf der Anzeigeeinrichtung (35; 43; 59; 72; 102; 150; 170; 180) dargestellten Bedienelemente (33; 61; 151; 161-169; 181-186) erfasst wird, ob sich ein Körperteil (36) eines Nutzers innerhalb eines Aktivierungsbereichs befindet, der räumlich relativ zu einem Darstellungsgebiet mindestens eines der Bedienelemente (33; 61; 151; 161-169; 181-186) auf der Anzeigeeinrichtung (35; 43; 59; 72; 102; 150; 170; 180) festgelegt ist.

3. Verfahren nach einem der Ansprüche 1 oder 2, **dadurch gekennzeichnet, dass** die Ermittlung der Bedienabsicht und das entsprechende Anpassen der dargestellten Information iterativ oder kontinuierlich ausgeführt werden.

4. Verfahren nach einem der Ansprüche 2 oder 3, **dadurch gekennzeichnet, dass** zur Ermittlung der Bedienabsicht Informationen verwendet werden, die Informationen über eine Körperaktion, insbesondere eine Bewegungsrichtung des Körperteils (36), und/oder über eine Blickrichtung des Nutzers umfassen.

5. Verfahren nach Anspruch 4, **dadurch gekennzeichnet, dass** anhand der Informationen ein Abstand des Körperteils (36) von der Darstellung des Bedienelements (33; 61; 151; 161-169; 181-186) ermittelt wird und das Bedienelement (33; 61; 151; 161-169; 181-186) in Abhängigkeit von diesem Abstand skaliert wird.

6. Verfahren nach einem der vorangehenden Ansprüche, **dadurch gekennzeichnet, dass** zur Ermittlung der Bedienabsicht Informationen verwendet werden, die Umgebungsinformationen über eine Fahrsituation umfassen, die beim Anpassen der optimierten dargestellten Informationen berücksichtigt werden.

7. Verfahren nach einem der vorangehenden Ansprüche, **dadurch gekennzeichnet, dass** das optimierte Darstellen für das Aktivieren das Verändern der Größe umfasst, wobei Bedienelemente, für die eine Bedienwahrscheinlichkeit ermittelt ist, größer dargestellt werden als Bedienelemente für die keine Bedienwahrscheinlichkeit ermittelt ist, und die Bedienelemente für die eine Bedienwahrscheinlichkeit ermittelt ist, hinsichtlich ihrer Darstellungsgröße in der Weise abgestuft, vorzugsweise in mindestens drei Stufen abgestuft, dargestellt werden, das Bedienelemente, deren ermittelte Bedienwahrscheinlichkeit größer ist, größer als Bedienelemente dargestellt werden, deren Bedienwahrscheinlichkeit geringer ist...

8. Verfahren nach einem der vorangehenden Ansprüche, **dadurch gekennzeichnet, dass** beim Ermitteln der Bedienabsicht von dem Körperteil ausgeführte Gesten erkannt und ausgewertet werden, wobei das Anpassen der dargestellten Informationen entsprechend einer der jeweiligen erkannten Geste zugeordneten Anpassfunktion durchgeführt wird.

9. Interaktive Bedienvorrichtung (100) in einem Kraftfahrzeug (101) umfassend eine Anzeigevorrichtung (35; 43; 59; 72; 102; 150; 170; 180), auf der Informationen darstellbar sind und/oder dargestellt werden, die Bedienelemente (33; 61; 151; 161-169; 181-186) beinhalten,
mindestens eine Sensoreinheit zum Erfassen von Sensorinformationen, um anhand der Sensorinformationen eine Bedienabsicht für mindestens eines der auf der Anzeigeeinrichtung (35; 43; 59; 72; 102; 150; 170; 180) dargestellten Bedienelemente zeitlich vor dessen Betätigung zu ermitteln, wobei bei einer Betätigung eine mit dem dargestellten Bedienelement verknüpfte Bedienaktion aktiviert und ausgelöst wird, und
eine Steuereinheit (120),'
**dadurch gekennzeichnet, dass**
die Steuereinheit (120) derart ausgebildet ist, dass bei Ermittlung einer Bedienabsicht für mindestens eines der auf der Anzeigeeinrichtung (35; 43; 59; 72; 102; 150; 170; 180) dargestellten Bedienelemente die auf der Anzeigeeinrichtung (35; 43; 59; 72; 102; 150; 170; 180) dargestellten Informationen in Abhängigkeit der ermittelten Bedienabsicht derart angepasst werden, dass das mindestens eine der Bedienelemente (33; 61; 151; 161-169; 181-186) optimiert für das Aktivieren des Bedienelementes (33; 61; 151; 161-169; 181-186) dargestellt wird,
und dass beim Ermitteln der Bedienabsicht eine Bedienwahrscheinlichkeit für das Bedienelement (33; 61; 151; 161-169; 181-186) und gegebenenfalls weitere Bedienwahrscheinlichkeiten für weitere Bedienelemente (33; 61; 151; 161-169; 181-186) ermittelt werden und eine Anpassung der dargestellten Informationen so erfolgt, dass das Bedienelement oder gegebenenfalls die weiteren Bedienelemente entsprechend ihrer Bedienwahrscheinlichkeit optimiert für eine Aktivierung der entsprechend zugeordneten Bedienaktion oder weiteren Bedienaktion dargestellt werden, und
dass die auf der Anzeigeeinrichtungen dargestellten Informationen, sofern keine Bedienabsicht ermittelt wird, für eine Darstellung angepasst werden, die für eine visuelle Informationsübermittlung optimiert ist,
und das optimierte Darstellen für das Aktivieren ein
- ein Einblenden oder ein Erniedrigen einer Transparenz des mindestens einen Bedienelements (33; 61; 151; 161-169; 181-186) und/oder
- ein Vergrößern des mindestens einen Bedienelements (33; 61; 151; 161-169; 181-186) und/oder
- ein Verändern einer Darstellungsposition des mindestens einen Bedienelements (33; 61; 151; 161-169; 181-186) und/oder
- ein Verändern eines relativen Abstands des mindestens einen Bedienelements von weiteren Bedienelementen und/oder
- eine Animation des Bedienelements (33; 61; 151; 161-169; 181-186)
umfasst und
das optimierte Darstellen für die visuelle Informationsübermittlung
- ein Ausblenden oder ein Erhöhen der Transparenz des mindestens einen Bedienelements (33; 61; 151; 161-169; 181-186) und/oder
- ein Verkleinern des mindestens einen Bedienelements (33; 61; 151; 161-169; 181-186) umfasst.

10. Vorrichtung nach Anspruch 9, **dadurch gekennzeichnet, dass** die mindestens eine Sensoreinheit zum Erfassen eines Körperteils (36) eines Benutzers innerhalb eines Aktivierungsbereiches, der räumlich relativ zu einem Darstellungsgebiet mindestens eines der Bedienelemente (33; 61; 151; 161-169; 181-186) auf der Anzeigeeinrichtung (35; 43; 59; 72; 102; 150; 170; 180) festgelegt ist, und zum Bereitstellen von Sensorinformationen vorgesehen ist, um eine Bedienabsicht für mindestens eines der auf der Anzeigeeinrichtung (35; 43; 59; 72; 102; 150; 170; 180) dargestellten Bedienelemente zu ermitteln.

11. Vorrichtung nach Anspruch 9 oder 10, **dadurch gekennzeichnet, dass** die Steuereinheit (120) derart ausgebildet ist, dass Umgebungsinformationen über eine Fahrsituation bei der Anpassung der optimiert dargestellten Informationen berücksichtigbar sind und/oder berücksichtigt werden.

12. Vorrichtung nach einem der Ansprüche 9 bis 11, **dadurch gekennzeichnet, dass** die Steuereinrichtung so ausgebildet ist, dass das optimierte Darstellen für das Aktivieren das Verändern der Größe umfasst, wobei Bedienelemente, für die eine Bedienwahrscheinlichkeit ermittelt ist, größer dargestellt werden als Bedienelemente für die keine Bedienwahrscheinlichkeit ermittelt ist, und die Bedienelemente für die eine Bedienwahrscheinlichkeit ermittelt ist, hinsichtlich ihrer Darstellungsgröße in der Weise abgestuft, vorzugsweise in mindestens drei Stufen abgestuft, dargestellt werden, das Bedienelemente, deren ermittelte Bedienwahrscheinlichkeit größer ist, größer als Bedienelemente dargestellt werden, deren Bedienwahrscheinlichkeit geringer ist.

13. Vorrichtung nach einem der Ansprüche 9 bis 12, **dadurch gekennzeichnet, dass** die Steuereinheit (120) ausgestaltet ist, dass anhand der Sensorinformationen ein Abstand des Körperteils (36) von der Darstellung des Bedienelements (33; 61; 151; 161-169; 181-186) ermittelbar ist und/oder ermittelt wird und das Bedienelement (33; 61; 151; 161-169; 181-186) in Abhängigkeit von diesem Abstand skalierbar ist und/oder skaliert wird.

14. Vorrichtung nach einem der Ansprüche 9 bis 13, **dadurch gekennzeichnet, dass** die mindestens eine Sensoreinheit als positionsauflösende berührungssensitive Einrichtung ausgestaltet ist.

15. Vorrichtung nach einem der Ansprüche 9 bis 14, **dadurch gekennzeichnet, dass** mindestens eine Sensoreinheit ausgestaltet ist, von dem Körperteil ausgeführte Gesten zu erkennen und auszuwerten, wobei das Anpassen der dargestellten Informationen entsprechend einer der jeweiligen erkannten Geste zugeordneten Anpassfunktion durchführbar ist.

16. Vorrichtung nach Anspruch 15, **dadurch gekennzeichnet, dass** die Gesten mindestens eine komplexe Geste umfassen, die von der mindestens eine Sensoreinheit anhand eines Ineinanderübergehens vordefinierter statischer Gesten und/oder anhand einer statischen Geste, die eine vordefinierte Bahnkurve durchläuft, erkennbar ist.

## Claims

1. Method for operating an interactive operator control apparatus (100) in a motor vehicle (101) having a display apparatus (35; 43; 59; 72; 102; 150; 170; 180) and information which is presented and/or can be presented on the display device (35; 43; 59; 72; 102; 150; 170; 180) and which contains operator control elements (33; 61; 151; 161-169; 181-186), comprising the following steps:
an operator control intention is ascertained for at least one of the operator control elements (33; 61; 151; 161-169; 181-186) which is presented or can be presented on the display device (35; 43; 59; 72; 102; 150; 170; 180), wherein the operator control intention for the at least one operator control element (33; 61; 151; 161-169; 181-186) is ascertained at a time prior to activation of the operator control action,
**characterized in that**
the information presented on the display apparatus (35; 43; 59; 72; 102; 150; 170; 180) is customized on the basis of the ascertained operator control intention, so that the at least one operator control element (33; 61; 151; 161-169; 181-186) is presented in optimized fashion for the activation of the at least one operator control element (33; 61; 151; 161-169; 181-186),
wherein the ascertainment of the operator control intention involves ascertainment of a probability of operator control for the operator control element (33; 61; 151; 161-169; 181-186) and possibly further probabilities of operator control for further operator control elements (33; 61; 151; 161-169; 181-186), and the presented information being customized such that the operator control element or possibly the further operator control elements is/are presented in optimized fashion for activation of the correspondingly associated operator control action or further operator control action on the basis of the probability of operator control for said operator control element(s), wherein the information presented on the display devices is, provided that no operator control intention is ascertained, customized for presentation which is optimized for visual conveyance of information, and the optimized presentation for the activation comprises
- showing, or lowering a transparency for, the at least one operator control element (33; 61; 151; 161-169; 181-186) and/or
- enlarging the at least one operator control element (33; 61; 151; 161-169; 181-186) and/or
- altering a presentation position for the at least one operator control element (33; 61; 151; 161-169; 181-186) and/or
- altering a relative distance of the at least one operator control element from further operator control elements and/or
- animating the operator control element (33; 61; 151; 161-169; 181-186)
and
the optimized presentation for the visual conveyance of information comprises
- hiding, or increasing the transparency of, the at least one operator control element (33; 61; 151; 161-169; 181-186) and/or
- reducing the at least one operator control element (33; 61; 151; 161-169; 181-186).

2. Method according to Claim 1, **characterized in that** ascertaining the operator control intention for at least one of the operator control elements (33; 61; 151; 161-169; 181-186) presented on the display device (35; 43; 59; 72; 102; 150; 170; 180) involves detecting whether a body part (36) of a user is within an activation region which is stipulated in a manner spatially relative to a presentation area for at least one of the operator control elements (33; 61; 151; 161-169; 181-186) on the display device (35; 43; 59; 72; 102; 150; 170; 180).

3. Method according to either of Claims 1 and 2, **characterized in that** the ascertainment of the operator control intention and the relevant customization of the presented information are performed iteratively or continuously.

4. Method according to either of Claims 2 and 3, **characterized in that** the operator control intention is ascertained by using information which comprises information about a body action, particularly a direction of movement of the body part (36), and/or about a direction of view of the user.

5. Method according to Claim 4, **characterized in that** the information is used to ascertain a distance between the body part (36) and the presentation of the operator control element (33; 61; 151; 161-169; 181-186), and the operator control element (33; 61; 151; 161-169; 181-186) is scaled on the basis of this distance.

6. Method according to one of the preceding claims, **characterized in that** the operator control intention is ascertained by using information which comprises environmental information about a driving situation, which information is taken into account when customizing the optimized presented information.

7. Method according to one of the preceding claims, **characterized in that** the optimized presentation for the activation comprises altering the size, wherein operator control elements for which a probability of operator control has been ascertained are presented in a larger form than operator control elements for which no probability of operator control has been ascertained, and the operator control elements for which a probability of operator control has been ascertained are presented in graduated fashion in respect of their presentation size, preferably in a form graduated in at least three stages, such that operator control elements for which the ascertained probability of operator control is relatively high are presented in a larger form than operator control elements for which the probability of operator control is relatively low.

8. Method according to one of the preceding claims, **characterized in that** the ascertainment of the operator control intention involves gestures performed by the body part being recognized and evaluated, wherein the presented information is customized on the basis of a customization function associated with the respective recognized gesture.

9. Interactive operator control apparatus (100) in a motor vehicle (101) comprising
a display apparatus (35; 43; 59; 72; 102; 150; 170; 180) on which information containing operator control elements (33; 61; 151; 161-169; 181-186) can be presented and/or is presented,
at least one sensor unit for capturing sensor information in order to use the sensor information to ascertain an operator control intention for at least one of the operator control elements presented on the display device (35; 43; 59; 72; 102; 150; 170; 180) at a time prior to operation of said operator control elements, wherein operation involves an operator control action which is linked to the presented operator control element being activated and triggered, and
a control unit (120),
**characterized in that**
the control unit (120) is designed such that ascertainment of an operator control intention for at least one of the operator control elements presented on the display device (35; 43; 59; 72; 102; 150; 170; 180) involves the information presented on the display device (35; 43; 59; 72; 102; 150; 170; 180) being customized on the basis of the ascertained operator control intention such that the at least one of the operator control elements (33; 61; 151; 161-169; 181-186) is presented in optimized fashion for the activation of the operator control element (33; 61; 151; 161-169; 181-186),
and **in that** the ascertainment of the operator control intention involves ascertainment of a probability of operator control for the operator control element (33; 61; 151; 161-169; 181-186) and possibly further probabilities of operator control for further operator control elements (33; 61; 151; 161-169; 181-186), and the presented information being customized such that the operator control element or possibly the further operator control elements is/are presented in optimized fashion for activation of the correspondingly associated operator control action or further operator control action on the basis of the probability of operator control for said operator control element(s), and
**in that** the information presented on the display devices is, provided that no operator control intention is ascertained, customized for presentation which is optimized for visual conveyance of information,
and the optimized presentation for the activation comprises
- showing, or lowering a transparency for, the at least one operator control element (33; 61; 151; 161-169; 181-186) and/or
- enlarging the at least one operator control element (33; 61; 151; 161-169; 181-186) and/or
- altering a presentation position for the at least one operator control element (33; 61; 151; 161-169; 181-186) and/or
- altering a relative distance between the at least one operator control element and further operator control elements and/or
- animating the operator control element (33; 61; 151; 161-169; 181-186) and
the optimized presentation for the visual conveyance of information comprises
- hiding, or increasing the transparency of, the at least one operator control element (33; 61; 151; 161-169; 181-186) and/or
- reducing the at least one operator control element (33; 61; 151; 161-169; 181-186).

10. Apparatus according to Claim 9, **characterized in that** the at least one sensor unit is intended to sense a body part (36) of a user within an activation region which is stipulated in a manner spatially relative to a presentation area for at least one of the operator control elements (33; 61; 151; 161-169; 181-186) on the display device (35; 43; 59; 72; 102; 150; 170; 180) and to provide sensor information in order to ascertain an operator control intention for at least one of the operator control elements presented on the display device (35; 43; 59; 72; 102; 150; 170; 180).

11. Apparatus according to Claim 9 or 10, **characterized in that** the control unit (120) is designed such that environmental information about a driving situation can be taken into account and/or is taken into account when the information presented in optimized fashion is customized.

12. Apparatus according to one of Claims 9 to 11, **characterized in that** the control device is designed such that the optimized presentation for the activation comprises altering the size, wherein operator control elements for which a probability of operator control has been ascertained are presented in a larger form than operator control elements for which no probability of operator control has been ascertained, and the operator control elements for which a probability of operator control has been ascertained are presented in graduated fashion in respect of their presentation size, preferably in a form graduated in at least three stages, such that operator control elements for which the ascertained probability of operator control is relatively high are presented in a larger form than operator control elements for which the probability of operator control is relatively low.

13. Apparatus according to one of Claims 9 to 12, **characterized in that** the control unit (120) is designed such that the sensor information can be used and/or is used to ascertain a distance between the body part (36) and the presentation of the operator control element (33; 61; 151; 161-169; 181-186), and the operator control element (33; 61; 151; 161-169; 181-186) can be scaled and/or is scaled on the basis of this distance.

14. Apparatus according to one of Claims 9 to 13, **characterized in that** the at least one sensor unit is in the form of a position-resolving touch-sensitive device.

15. Apparatus according to one of Claims 9 to 14, **characterized in that** at least one sensor unit is designed to recognize and evaluate gestures performed by the body part, wherein the presented information can be customized on the basis of a customization function associated with the respective recognized gesture.

16. Apparatus according to Claim 15, **characterized in that** the gestures comprise at least one complex gesture which can be recognized by the at least one sensor unit from merging of predefined static gestures and/or from a static gesture which passes through a predefined trajectory.

## Revendications

1. Procédé pour exploiter un dispositif de commande interactif (100) dans un véhicule automobile (101) avec un dispositif d'affichage (35 ; 43 ; 59 ; 72 ; 102 ; 150 ; 170 ; 180) et sur l'équipement d'affichage (35 ; 43 ; 59 ; 72 ; 102 ; 150 ; 170 ; 180) des informations représentées et/ou représentables contenant les éléments de commande (33 ; 61 ; 151 ; 161-169 ; 181-186), comportant les étapes suivantes :
détermination d'une intention de commander au moins un des éléments de commande (33 ; 61 ; 151 ; 161-169 ; 181-186) représentés et/ou représentables sur l'équipement d'affichage (35 ; 43 ; 59 ; 72 ; 102 ; 150 ; 170 ; 180), l'intention de commander au moins un des éléments de commande (33 ; 61 ; 151 ; 161-169 ; 181-186) étant déterminée temporellement avant une activation de l'action de commande,
**caractérisé en ce que**
les informations représentées sur l'équipement d'affichage (35 ; 43 ; 59 ; 72 ; 102 ; 150 ; 170 ; 180) sont adaptées en fonction de l'intention de commander déterminée, de telle sorte qu'au moins un élément de commande (33 ; 61 ; 151 ; 161-169 ; 181-186) soit représenté optimisé pour l'activation d'au moins un élément de commande (33 ; 61 ; 151 ; 161-169 ; 181-186),
une probabilité de commande de l'élément de commande (33 ; 61 ; 151 ; 161-169 ; 181-186) et le cas échéant d'autres probabilités de commande d'autres éléments de commande (33 ; 61 ; 151 ; 161-169 ; 181-186) étant déterminées lors de la détermination de l'intention de commander et une adaptation des informations représentées en découlant de telle sorte que l'élément de commande ou le cas échéant les autres éléments de commande sont représentés optimisés pour une activation des actions de commande ou des autres actions de commande assignées correspondantes en fonction de leurs probabilités de commande, les informations représentées sur l'équipement d'affichage étant adaptées pour une représentation optimisée pour une transmission d'information visuelle dans la mesure où aucune intention de commander n'est déterminée,
et la représentation optimisée de l'activation comportant
- une insertion ou une diminution d'une transparence d'au moins un élément de commande (33 ; 61 ; 151 ; 161-169 ; 181-186) et/ou
- un agrandissement d'au moins un élément de commande (33 ; 61 ; 151 ; 161-169 ; 181-186) et/ou
- une modification d'une position de représentation d'au moins un élément de commande (33 ; 61 ; 151 ; 161-169 ; 181-186) et/ou
- une modification d'une distance relative d'au moins un élément de commande par rapport à d'autres éléments de commande et/ou
- une animation de l'élément de commande (33 ; 61 ; 151 ; 161-169 ; 181-186)
et la représentation optimisée de la transmission d'informations visuelles comportant
- un masquage ou une augmentation de la transparence d'au moins un élément de commande (33 ; 61 ; 151 ; 161-169 ; 181-186) et/ou
- une réduction de la taille d'au moins un élément de commande (33 ; 61 ; 151 ; 161-169 ; 181-186).

2. Procédé selon la revendication 1, **caractérisé en ce que** pour la détermination de l'intention de commander au moins un élément de commande (33 ; 61 ; 151 ; 161-169 ; 181-186) représenté sur l'équipement d'affichage (35 ; 43 ; 59 ; 72 ; 102 ; 150 ; 170 ; 180), on détecte si une partie du corps (36) d'un utilisateur se trouve à l'intérieur d'un périmètre d'activation défini dans l'espace par rapport à un domaine de représentation d'au moins un élément de commande (33 ; 61 ; 151 ; 161-169 ; 181-186) sur l'équipement d'affichage (35 ; 43 ; 59 ; 72 ; 102 ; 150 ; 170 ; 180).

3. Procédé selon une des revendications 1 ou 2, **caractérisé en ce que** la détermination de l'intention de commander et l'adaptation correspondante de l'information représentée sont réalisées de manière itérative ou en continu.

4. Procédé selon une des revendications 2 ou 3, **caractérisé en ce que** pour la détermination de l'intention de commander, on utilise des informations comprenant des informations concernant une action du corps, notamment une direction de mouvement de la partie du corps (36) et/ou concernant une direction du regard de l'utilisateur.

5. Procédé selon la revendication 4, **caractérisé en ce que** à l'aide des informations, on détermine une distance de la partie du corps (36) à la représentation de l'élément de commande (33 ; 61 ; 151 ; 161-169 ; 181-186) et on calibre l'élément de commande (33 ; 61 ; 151 ; 161-169 ; 181-186) en fonction de cette distance.

6. Procédé selon une des revendications précédentes, **caractérisé en ce que** pour la détermination de l'intention de commander, on utilise des informations comprenant des informations sur l'environnement concernant une situation de trafic, qui seront prises en compte lors de l'adaptation des informations optimisées représentées.

7. Procédé selon une des revendications précédentes, **caractérisé en ce que** la représentation optimisée de l'activation comprend la modification de la dimension, des éléments de commande pour lesquels on a déterminé une probabilité de commande étant représentés plus grands que les éléments de commande pour lesquels on n'a pas déterminé de probabilité de commande, et les éléments de commande pour lesquels on a déterminé une probabilité de commande sont représentés en ce qui concerne leur dimension de représentation à une échelle réduite, de préférence réduite en au moins trois niveaux, les éléments de commande dont la probabilité de commande déterminée est plus grande étant représentés plus grands que d es éléments de commande dont la probabilité de commande est plus faible.

8. Procédé selon une des revendications précédentes, **caractérisé en ce que** lors de la détermination de l'intention de commander on reconnaît et on exploite des gestes exécutés par la partie du corps, l'adaptation des informations représentées étant effectuée en fonction d'une des fonctions d'adaptation affectée aux gestes reconnus correspondants.

9. Dispositif de commande interactif (100) dans un véhicule automobile (101) comportant
un dispositif d'affichage (35 ; 43 ; 59 ; 72 ; 102 ; 150 ; 170 ; 180) sur lequel sont représentables et/ou sont représentées des informations contenant les éléments de commande (33 ; 61 ; 151 ; 161-169 ; 181-186),
au moins une unité de capteurs pour enregistrer des informations de capteurs afin de déterminer à l'aide des informations de capteurs une intention de commander au moins un des éléments de commande représentés sur l'équipement d'affichage (35 ; 43 ; 59 ; 72 ; 102 ; 150 ; 170 ; 180) temporellement avant sa manoeuvre, la manoeuvre activant et déclenchant une action de commande liée à l'élément de commande représenté, et
une unité de contrôle (120),
**caractérisé en ce que** l'unité de contrôle (120) est conçue de telle sorte que lors de la détermination d'une intention de commander au moins un des éléments de commande représentés sur l'équipement d'affichage (35 ; 43 ; 59 ; 72 ; 102 ; 150 ; 170 ; 180), les informations représentés sur l'équipement d'affichage (35 ; 43 ; 59 ; 72 ; 102 ; 150 ; 170 ; 180) sont adaptées en fonction de l'intention de commander déterminée, de telle sorte qu'au moins un élément de commande (33 ; 61 ; 151 ; 161-169 ; 181-186) soit représenté optimisé pour l'activation de l'élément de commande (33 ; 61 ; 151 ; 161-169 ; 181-186),
et **en ce qu'**une probabilité de commande de l'élément de commande (33 ; 61 ; 151 ; 161-169 ; 181-186) et le cas échéant d'autres probabilité de commande d'autres éléments de commande (33 ; 61 ; 151 ; 161-169 ; 181-186) sont déterminées lors de la détermination de l'intention de commander et une adaptation des informations représentées en découlant de telle sorte que l'élément de commande ou le cas échéant les autres éléments de commande sont représentés optimisés pour une activation des actions de commande ou des autres actions de commande assignées correspondantes en fonction de leurs probabilités de commande,
et **en ce que** les informations représentées sur l'équipement d'affichage sont adaptées pour une représentation optimisée pour une transmission d'information visuelle dans la mesure où aucune intention de commander n'est déterminée,
et la représentation optimisée de l'activation comportant
- une insertion ou une diminution d'une transparence d'au moins un élément de commande (33 ; 61 ; 151 ; 161-169 ; 181-186) et/ou
- un agrandissement d'au moins un élément de commande (33 ; 61 ; 151 ; 161-169 ; 181-186) et/ou
- une modification d'une position de représentation d'au moins un élément de commande (33 ; 61 ; 151 ; 161-169 ; 181-186) et/ou
- une modification d'une distance relative d'au moins un élément de commande par rapport à d'autres éléments de commande et/ou
- une animation de l'élément de commande (33 ; 61 ; 151 ; 161-169 ; 181-186) et
la représentation optimisée de la transmission d'informations visuelles comportant
- un masquage ou une augmentation de la transparence d'au moins un élément de commande (33 ; 61 ; 151 ; 161-169 ; 181-186) et/ou
- une réduction de la taille d'au moins un élément de commande (33 ; 61 ; 151 ; 161-169 ; 181-186).

10. Dispositif selon la revendication 9, **caractérisé en ce que** l'unité de capteurs pour détecter une partie du corps (36) d'un utilisateur à l'intérieur d'un périmètre d'activation est défini dans l'espace par rapport à un domaine de représentation d'au moins un élément de commande (33 ; 61 ; 151 ; 161-169 ; 181-186) sur l'équipement d' affichage (35 ; 43 ; 59 ; 72 ; 102 ; 150 ; 170 ; 180), et est prévu pour la mise à disposition d'informations de capteurs afin de déterminer une intention de commander au moins un élément de commande représenté sur l'équipement d'affichage (35 ; 43 ; 59 ; 72 ; 102 ; 150 ; 170 ; 180).

11. Dispositif selon la revendication 9 ou 10, **caractérisé en ce que** l'unité de contrôle (120) est conçue de telle sorte que des informations sur l'environnement concernant une situation de trafic pourront être ou seront prises en compte pour l'adaptation des informations optimisées représentées.

12. Dispositif selon une des revendications 9 à 11, **caractérisé en ce que** l'équipement de contrôle est conçu de telle sorte que la représentation optimisée de l'activation comprend la modification de la dimension, des éléments de commande pour lesquels on a déterminé une probabilité de commande étant représentés plus grands que des éléments de commande pour lesquels on a pas déterminé de probabilité de commande, et les éléments de commande pour lesquels on a déterminé une probabilité de commande sont représentés en ce qui concerne leur dimension de représentation à une échelle réduite, de préférence réduite en au moins trois niveaux, les éléments de commande dont la probabilité de commande déterminée est plus grande étant représentés plus grands que les éléments de commande dont la probabilité de commande est plus faible.

13. Dispositif selon une des revendications 9 à 12, **caractérisé en ce que** l'unité de contrôle (120) est conçue pour que les informations des capteurs permettent de déterminer ou déterminent une distance de la partie du corps (36) à la représentation de l'élément de commande (33 ; 61 ; 151 ; 161-169 ; 181-186) et on peut calibrer ou on calibre l'élément de commande (33 ; 61 ; 151 ; 161-169 ; 181-186) en fonction de cette distance.

14. Dispositif selon une des revendications 9 à 13, **caractérisé en ce qu'**au moins une unité de capteurs est conçue comme équipement à résolution spatiale sensible au toucher.

15. Dispositif selon une des revendications 9 à 14, **caractérisé en ce qu'**au moins une unité de capteurs est conçue pour reconnaître et pour exploiter des gestes exécutés par la partie du corps, l'adaptation des informations représentées pouvant être effectuée en fonction d'une des fonctions d'adaptation affectée aux gestes reconnus correspondants.

16. Dispositif selon la revendication 15, **caractérisé en ce que** les gestes comprennent au moins un geste complexe reconnaissable par au moins une unité de capteurs à l'aide d'un enchaînement de gestes statiques prédéfinis et/ou à l'aide d'un geste statique parcourant une trajectoire courbe prédéfinie.
